# EUROPÄISCHE PATENTSCHRIFT

(11) **EP 3 059 189 B1**
(45) Veröffentlichungstag und Bekanntmachung des Hinweises auf die Patenterteilung: **12.01.2022**
(21) Anmeldenummer: 16020045.7
(22) Anmeldetag: 08.03.2013
(51) Int. Cl.: B65G 37/02, B29C 31/00, B29D 11/00, B65G 43/10, B24B 13/00

(54) **ANLAGE UND VERFAHREN ZUM BEARBEITEN OPTISCHER LINSEN**
SYSTEM AND METHOD FOR PROCESSING OPTICAL LENSES
INSTALLATION ET PROCÉDÉ PERMETTANT DE PRÉPARER DES LENTILLES OPTIQUES

(30) Priorität: 09.03.2012 EP 12001640; 09.05.2012 EP 12003626; 16.05.2012 EP 12003858; 06.12.2012 DE 202012011690 U
(43) Veröffentlichungstag der Anmeldung: 24.08.2016
(62) Teilanmeldung aus: 13720773.4
(73) Patentinhaber: Schneider GmbH & Co. KG, 35112 Fronhausen (DE)
(72) Erfinder: Schneider, Gunter, 35037 Marburg (DE)
(74) Vertreter: Von Rohr Patentanwälte Partnerschaft mbB

(56) Entgegenhaltungen:
- EP-A2- 1 288 758
- EP-A2- 2 489 468
- DE-A1- 19 815 728
- DE-A1-102004 021 696
- DE-A1-102007 059 303
- US-A- 5 024 315
- US-A- 6 071 440
- US-A1- 2005 106 999

## Beschreibung

Die vorliegende Erfindung betrifft ein Verfahren zum Bearbeiten optischer Linsen und eine Anlage zur Bearbeitung optischer Linsen.

Die Bearbeitung von optischen Linsen erfolgt in mehreren Schritten bzw. in mehreren separaten Bearbeitungseinrichtungen. Die Bearbeitung kann insbesondere eine formgebende oder spanende Bearbeitung, ein Polieren, ein Beschichten, ein Prüfen bzw. Messen, ein Markieren, ein Beschichten und/oder ein Reinigen umfassen.

Es ist grundsätzlich bekannt, Transfersysteme zum Transport von Werkstücken, insbesondere von Werkstückträgern mit den Werkstücken, zu und von Bearbeitungseinrichtungen einzusetzen.

Die WO 2008/042277 A1 offenbart eine Anlage zur Bearbeitung optischer Linsen, wobei die Anlage verschiedene Bearbeitungseinrichtungen und ein Transfersystem zwischen den Bearbeitungseinrichtungen aufweist. Es wird eine Bearbeitungslinie zur seriellen Bearbeitung gebildet. Die Linsen werden also von einer Bearbeitungseinrichtung zur nächsten Bearbeitungseinrichtung gefördert, bis die Linsen alle Bearbeitungseinrichtungen durchlaufen haben. Die Bearbeitungseinrichtungen und das Transfersystem mit Fördereinrichtungen werden von einem zentralen Computer oder Controller gesteuert.

Die DE 41 07 084 A1 offenbart ein automatisches Fördersystem zum Transport von Objekten zwischen Fertigungsbereichen, die jeweils aus einer oder mehreren Fertigungsstationen der gleichen Art bestehen und mit vorbestimmten Abständen in zwei parallelen Reihen angeordnet sind. Zwischen zwei benachbarten Fertigungsbereichen ist eine Fördereinrichtung angeordnet. Weiter ist zwischen den beiden parallelen Reihen eine weitere Fördereinrichtung zum Transport der Objekte zwischen voneinander entfernten Fertigungsbereichen angeordnet. Zusätzlich ist zwischen den einzelnen Fertigungsstationen eine weitere Fördereinrichtung mit einem führerlosen Rangierwagen mit einem zugeordneten Laderoboter vorgesehen. Das Transfersystem und die Fördereinrichtungen werden von einem zentralen Steuercomputer gesteuert.

Die GB 1 567 587 A offenbart ein Transfersystem für Werkstücke, um diese wahlweise zwei unabhängig arbeitenden Bearbeitungseinrichtungen mittels Endlosförderbändern zuzufördern.

Die US 6,039,899 A und die US 6,071,440 A offenbaren eine Anlage zum Gießen und Härten von Kontaktlinsen. Paletten mit vorderen Gießformhälften und Paletten mit hinteren Gießformhälften werden von separaten Bandfördereinrichtungen einer Transfereinrichtung zugefördert, die die Paletten abwechselnd in der gewünschten Reihenfolge an eine weitere Bandfördereinrichtung überführt.

Die WO 2010/012364 A1 offenbart eine Anlage zur Sortierung von Waren, um die Waren in einer geordneten Reihenfolge in ein Transportfahrzeug zu laden.

Die DE 10 2007 059 303 A1 offenbart eine Anlage mit einem Hauptförderband, das mindestens zwei in gleicher Richtung umlaufende Spuren aufweist. Eine äußere Spur dient als Überholspur, auf welcher Werkstücke oder Werkstückträger, welche einer Bearbeitung nicht zugeführt werden sollen, weiter transportiert werden. Ein Wechsel von einer Transportspur auf eine andere Transportspur erfolgt durch Schieber und zugeordnete Stempel. Außerdem sind Querförderer mit in entgegengesetzter Richtung laufenden Förderbändern jeder Bearbeitungsstation zugeordnet, wobei zu bearbeitende Werkstücke bzw. Werkstückträger über entsprechende Weichen von dem Hauptförderband an die Querförderer zur Bearbeitung in der jeweiligen Bearbeitungsstation ausgeschleust werden. Die bekannte Anlage besitzt einen relativ hohen Platzbedarf und erfordert zusätzlich zu dem Hauptförderband für jede Bearbeitungsstation zwei Querförderbänder. Dies gestattet keinen optimalen Arbeitsablauf. Die DE 30 28 283 A1 offenbart ein ähnliches Fertigungssystem.

Die EP 2 489 468 A2 offenbart eine Anlage zur Randbearbeitung optischer Linsen, wobei die Anlage eine zentrale Systemsteuerung, mehrere Bearbeitungseinrichtungen und ein Transfersystem zur Förderung der Linsen zu und von den Bearbeitungseinrichtungen aufweist. Die Bearbeitungseinrichtungen weisen jeweils eine Steuereinheit auf, die von der Systemsteuerung Linsen zur Bearbeitung anfordert, wenn eine Bearbeitung mit der zugeordneten Bearbeitungseinrichtung möglich ist.

Die US 2005/010699 A1 offenbart eine Anlage mit mehreren Bearbeitungseinrichtungen zur Randbearbeitung optischer Linsen und einer Handhabungseinrichtung, wobei die Handhabungseinrichtung die Linsen zu und von den Bearbeitungseinrichtungen fördert. Die Bearbeitungseinrichtungen kommunizieren unmittelbar mit der Handhabungseinrichtung und übermitteln der Handhabungseinrichtung Steueranweisungen.

Die DE 198 15 728 A1 offenbart eine Anlage zum Formbearbeiten der Ränder von Brillengläsern mit mehreren Bearbeitungseinrichtungen und einer zwischen den Bearbeitungseinrichtungen angeordneten Fördereinrichtung für Roh- und Fertiggläser. Parallel zu den Bearbeitungseinrichtungen sind zwei Förderbänder zum Transport der Roh- und Fertiggläser vorgesehen.

Die EP 1 288 758 A2 offenbart ein System und ein Verfahren zum Verpacken von Kontaktlinsen, wobei fehlerhafte Linsen bereits vor dem Verpacken aussortiert werden. Hierzu werden im System die Positionen, an denen sich akzeptierte Linsen befinden, von einem Kontrollsystem nachverfolgt, um nur an diesen Positionen Verpackungen einzusetzen und Leerverpackungen zu vermeiden.

Die DE 10 2004 021 696 A1 betrifft eine Aufblockstation für optische Linsen. Die Aufblockstation kann in einer Bearbeitungsstraße angeordnet sein, gebildet aus der Aufblockstation, einer daran anschließenden Bearbeitungsstation zum spanenden Bearbeiten der Linse und eine wiederum daran anschließende Polierstation. Zwischen den Stationen kann ein Datenaustausch vorgesehen sein.

Die DE 10 2007 059 303 A1 offenbart eine Verarbeitungsanlage, welche im Wesentlichen aus einer Reihe von Bearbeitungsstationen besteht, die miteinander mit einem umlaufenden Hauptförderband verkettet sind. Das Hauptförderband weißt zwei Spuren auf, wobei eine äußere Spur als Überholspur dient, die Werkstückträger ohne Ausschleusung an den Bearbeitungsstationen vorbeitransportieren kann.

Bei der Linsenbearbeitung ist es bisher üblich, eine Bearbeitungslinie aus mehreren Bearbeitungseinrichtungen zu bilden, die von den zu bearbeitenden Linsen nacheinander durchlaufen werden. Die Bearbeitungslinie wird dann insbesondere auf eine bestimme Bearbeitung oder Linsenform eingestellt. Für verschiedene Bearbeitungen, beispielsweise unterschiedlich zu bearbeitende Linsen, muss entweder eine Umrüstung erfolgen oder wird eine separate Bearbeitungslinie eingesetzt. Bei der Bearbeitung unterschiedlicher Linsen kann dies zur Folge haben, dass eine sehr ungleichmäßige Auslastung verschiedener Bearbeitungslinien erfolgt oder dass eine häufige Umrüstung erforderlich ist. Das aufeinanderfolgende bzw. lineare Durchlaufen einer vorgegebenen Folge von Bearbeitungseinrichtungen hat den Nachteil, dass bei Ausfall einer Bearbeitungseinrichtung die Bearbeitung insgesamt angehalten werden muss. Weiter ist eine optimale Auslastung von verschiedenen Bearbeitungseinrichtungen, insbesondere wenn diese unterschiedliche Bearbeitungskapazitäten haben, in den üblichen Bearbeitungslinien nicht möglich. Üblicherweise werden alle Bearbeitungseinrichtungen und Fördereinrichtungen von einer zentralen Steuerung gesteuert. Insbesondere wird üblicherweise zentral festgelegt, welche Bearbeitungseinrichtung welche Linse in welcher Form bearbeitet. Bei bestehenden Bearbeitungslinien ist eine Erweiterung daher bisher sehr aufwendig. Üblicherweise müssen dann ein kompletter Umbau und eine Neuprogrammierung der zentralen Steuerung erfolgen.

Der vorliegenden Erfindung liegt die Aufgabe zugrunde, eine Anlage zur Bearbeitung optischer Linsen sowie ein Verfahren zum Bearbeiten optischer Linsen anzugeben, wobei eine optimierte Bearbeitung und Handhabung bei hoher Flexibilität und/oder geringem Platzbedarf insbesondere auch unter Berücksichtigung unterschiedlicher Bearbeitungsgeschwindigkeiten oder Kapazitäten von unterschiedlichen Bearbeitungseinrichtungen ermöglicht wird bzw. werden, insbesondere wobei eine Erweiterung der Anlage sehr einfach möglich ist.

Die obige Aufgabe wird durch ein Verfahren gemäß Anspruch 1 oder eine Anlage gemäß Anspruch 11 gelöst. Vorteilhafte Weiterbildungen sind Gegenstand der Unteransprüche.

Generell ist anzumerken, dass die erforderlichen Bearbeitungsschritte und deren Reihenfolge, um aus einer Linse bzw. einem Linsenrohling eine bearbeitete bzw. fertige Linse zu fertigen, in einem sogenannten Bearbeitungsplan festgelegt sind, aber dass bei mehreren Bearbeitungseinrichtungen für die gleiche Bearbeitung, beispielsweise für das Polieren, die jeweilige Einrichtung und damit die konkret zu benutzenden Einrichtungen ausgewählt werden können. Die unabhängige Bearbeitung durch die Bearbeitungseinrichtungen ist vorzugsweise so zu verstehen, dass die Bearbeitung in der jeweiligen Einrichtung unabhängig von anderen Bearbeitungen und unabhängig von dem Transfersystem abläuft, wobei aber die Reihenfolge der Bearbeitungsschritte vorgegeben ist bzw. erhalten bleibt. Der tatsächliche Bearbeitungszustand spiegelt sich im Bearbeitungsstatus wieder, der insbesondere angibt, welche Bearbeitung schon erfolgt ist oder als nächstes erfolgen soll, wobei dies besonders bevorzugt unter Verweis auf den entsprechenden Bearbeitungsplan für die jeweilige Linse erfolgt.

Die unabhängige Bearbeitung durch die Bearbeitungseinrichtung ist vorzugsweise so zu verstehen, dass die Bearbeitungseinrichtungen selbsttätig bzw. unabhängig von einer zentralen Steuerung zu bearbeitende Linsen bzw. Linsenträger mit zu bearbeitenden Linsen - besonders bevorzugt unter Berücksichtigung der erforderlichen Bearbeitung - auswählen bzw. anfordern und/oder sich zufördern lassen. Diese Auswahl kann wahlweise in einer logischen Ebene oder in der physischen Ebene erfolgen. Bei Auswahl in der logischen Ebene kann die jeweilige Bearbeitungseinrichtung beispielsweise einen Auftrag oder einen Datensatz mit Informationen über eine zu bearbeitende Linse aus einem Datenspeicher, Datenbankserver, einer Systemsteuerung o.dgl. auswählen und sich diese Linse bzw. den entsprechenden Linsenträger mit dieser Linse dann zu fördern (lassen). Bei Auswahl in der physischen Ebene kann eine Bearbeitungseinrichtung beispielsweise zu bearbeitende Linsen bzw. Linsenträger mit zu bearbeitenden Linsen - insbesondere mittels eines Sensors o. dgl. - erfassen oder identifizieren und unter Berücksichtigung des jeweiligen Auftrags bzw. Datensatzes mit Informationen zur erforderlichen Bearbeitung eine geeignete Linse oder einen entsprechenden Linsenträger auswählen und sich zur Bearbeitung zu fördern (lassen). Hierdurch wird eine zumindest weitgehend autonome Bearbeitung von Linsen durch die einzelnen Bearbeitungseinrichtungen erreicht, so dass insbesondere bei der Erweiterung von Anlagen eine ansonsten erforderliche, sehr aufwendige Umprogrammierung oder Neuprogrammierung von zentralen Steuerungen ganz unterbleiben oder zumindest minimiert werden kann.

Ein Aspekt der vorliegenden Erfindung liegt also insbesondere darin, dass die Bearbeitungseinrichtungen zumindest möglichst weitgehend selbsttätig bzw. unabhängig arbeiten, so dass besonders bevorzugt die Bearbeitungseinrichtungen individuell Linsen bzw. Linsenträger vom Transfersystem holen bzw. anfordern, um eine erforderliche Bearbeitung durchzuführen, und danach die bearbeitete(n) Linse(n) wieder auf das Transfersystem zurückgeben, also in die Förderung bzw. den Förderkreislauf wieder einschleusen. Diese Selbstständigkeit bzw. Unabhängigkeit der Bearbeitungseinrichtungen vereinfacht das Einbinden zusätzlicher oder neuer Bearbeitungseinrichtungen in die Anlage wesentlich.

Bei einer im vorgenannten Sinne unabhängig arbeitenden Bearbeitungseinrichtung ist es wichtig, wer das Kommando gibt, dass eine neue Linse bzw. ein neuer Linsenträger angefordert bzw. geladen werden muss.

Gemäß einer bevorzugten Ausführungsform weist das Transfersystem vorzugsweise mindestens einen Sensor, beispielsweise eine Barcode-Lesestation oder dgl., für Linsen bzw. Linsenträger auf und teilt einer zugeordneten Bearbeitungseinrichtung nach entsprechender Erfassung und ggf. Auswertung eine Identifikation oder direkt den Bearbeitungsstatus einer erfassten Linse bzw. eines erfassten Linsenträgers mit. Der Bearbeitungsstatus kann optional mit Hilfe eines zentralen Datenspeichers, einer zentralen Datenbank, einer zentralen Systemsteuerung oder dergleichen abgefragt oder abgeglichen bzw. festgestellt werden. Die Bearbeitungseinrichtung kann dann selbstständig die erfasste Linse bzw. den erfassten Linsenträger anfordern bzw. sich zufördern (lassen), sofern die Bearbeitungseinrichtung die (als nächstes) erforderliche Bearbeitung durchführen kann. Bei dieser Art der Anforderung von zu bearbeitenden Linsen müssen bereits vorhandene Bearbeitungseinrichtungen nicht aktualisiert werden bzw. keine besondere Mitteilung erhalten, wenn neue oder zusätzliche Bearbeitungseinrichtungen in die Anlage eingebunden und/oder zusätzliche Bearbeitungsgänge eingeplant werden. Vielmehr wird hier der Produktionsfluss bzw. die Förderung der Linsen / Linsenträger insbesondere durch eine zentrale Steuereinrichtung, insbesondere durch einen sogenannten Bandleitrechner, des Transfersystems - also des Band- bzw. Fördersystems - und/oder durch eine Systemsteuerung der Anlage gesteuert, insbesondere da hierdurch die Förderung der Linsen bzw. Linsenträger entlang der Bearbeitungseinrichtungen gesteuert oder beeinflusst wird.

Gemäß einer Ausführungsvariante kann die Bearbeitungseinrichtung einen eigenen Sensor, insbesondere eine Barcode-Lesestation oder dergleichen, zur Erfassung und ggf. Identifizierung von Linsen bzw. Linsenträgern aufweisen. In diesem Fall kann die Bearbeitungseinrichtung eine erfasste Linse bzw. einen erfassten Linsenträger sich holen oder anfordern, insbesondere durch direkte Ansteuerung einer entsprechenden Fördereinrichtung, Transfereinrichtung, Wechseleinrichtung oder dgl., falls die jeweilige Bearbeitungseinrichtung die erforderliche Bearbeitung durchführen kann. Nach durchgeführter Bearbeitung ändert die Bearbeitungseinrichtung den Bearbeitungsstatus der Linse bzw. des Linsenträgers - insbesondere in einer zentralen Datenbank, Systemsteuerung oder dergleichen - und gibt die bearbeitete Linse bzw. den Linsenträger wieder an das Transfersystem ab. Bei dieser Variante können die Bearbeitungseinrichtungen derart unabhängig und autark sein, dass diese den Produktionsfluss bzw. die Förderung der Linsen bzw. Linsenträger steuern. In diesem Fall muss die jeweilige Fördereinrichtung die anderen Fördereinrichtungen am Transfersystem bzw. der Anlage kennen und ihr ebenfalls der Bearbeitungsplan - also die Bearbeitungsfolge - bekannt sein. Wenn neue Bearbeitungseinrichtungen hinzukommen und/oder wenn sich der Bearbeitungsplan ändert, muss dies jeder Bearbeitungseinrichtung mitgeteilt werden oder in einer entsprechenden zentralen Datenbank, Systemsteuerung oder dergleichen abgelegt bzw. zugänglich gemacht werden.

Gemäß einem Aspekt der vorliegenden Erfindung ist jeder Bearbeitungseinrichtung eine eigene Fördereinrichtung zugeordnet. Zwischen den verschiedenen Bearbeitungseinrichtungen mit den zugeordneten Fördereinrichtungen sind jeweils Transfereinrichtungen angeordnet. Die Transfereinrichtungen und die Fördereinrichtungen der Bearbeitungseinrichtungen bilden eine erste, insbesondere zumindest im wesentlichen geradlinig verlaufende Transportspur. Die Transfereinrichtungen sind zur Aufnahme und temporären Zwischenspeicherung und zur bedarfsweisen Weiterförderung mindestens einer Linse oder eines Linsenträgers wahlweise an eine nachfolgende Bearbeitungseinrichtung bzw. Fördereinrichtung oder an eine zweite Transportspur ausgebildet. So werden ein kompakter Aufbau und eine flexible Bearbeitung ermöglicht.

Gemäß einem Aspekt der vorliegenden Erfindung weist die Anlage oder das Transfersystem vorzugsweise eine vorzugsweise gemeinsame oder zentrale Steuereinrichtung zur Steuerung der Transfereinrichtungen auf, wobei die Fördereinrichtungen der Bearbeitungseinrichtungen von der jeweiligen Bearbeitungseinrichtung bzw. deren Maschinensteuerung und insbesondere unabhängig voneinander und/oder unabhängig von dem Transfersystem bzw. den Transfereinrichtungen steuerbar bzw. antreibbar sind. Dies gestattet eine optimierte, insbesondere teilweise dezentrale Steuerung. Hierdurch kann insbesondere erreicht werden, dass die einzelnen Bearbeitungen in den einzelnen Bearbeitungseinrichtungen Vorrang haben und die Transfereinrichtungen und weitere Fördereinrichtungen des Transfersystems die Linsen bzw. Linsenträger nur bedarfsweise zu den Bearbeitungseinrichtungen und von diesen weg fördern. Erfindungsgemäß können einzelne oder mehrere Bearbeitungseinrichtungen selbsttätig Linsen oder Linsenträger zur Bearbeitung anfordern oder auswählen oder sich zu fördern lassen, besonders bevorzugt unabhängig von anderen Bearbeitungseinrichtungen und/oder einer zentralen Systemsteuerung und/oder Steuereinrichtung, wobei für die Bearbeitung erforderliche Produktions- bzw. Bearbeitungsdaten, insbesondere Bearbeitungspläne und Bearbeitungsstati, Linsendaten o. dgl. bedarfsweise von einem insbesondere zentralen Server, Datenbanksystem o. dgl. bei Bedarf abgerufen oder berücksichtigt werden können. Dies ermöglicht eine Optimierung des Bearbeitungsablaufs und ist der flexiblen Bearbeitung zuträglich. Weiter erleichtert dies einen einfachen und modularen Aufbau und eine Erweiterung der Anlage.

Gemäß einem weiteren Aspekt der vorliegenden Erfindung ist die einer Bearbeitungseinrichtung zugeordnete Fördereinrichtung in die jeweilige Bearbeitungseinrichtung integriert und/oder an diese (fest) angebaut. Besonders bevorzugt endet die jeweilige Fördereinrichtung zumindest im wesentlichen in der Flucht oder Verlängerung einer Seite der Bearbeitungseinrichtung. Die Länge der Fördereinrichtung entspricht vorzugsweise zumindest im wesentlichen der Breite der jeweiligen Bearbeitungseinrichtung. Dies ist einem kompakten Aufbau insbesondere einer Anlage mit mehreren Bearbeitungseinrichtungen zuträglich.

Die Transfereinrichtungen zwischen den Bearbeitungseinrichtungen ermöglichen, dass nach erfolgter Bearbeitung einer Linse oder eines Linsenpaares eine Bearbeitungseinrichtung bzw. die der Bearbeitungseinrichtung zugeordnete Fördereinrichtung wieder frei gefahren werden kann. Eine bearbeitete Linse bzw. ein Linsenträger mit mindestens einer bearbeiteten Linse kann nämlich an die nachgeordnete Transfereinrichtung weiter gefördert werden. Diese nimmt die bearbeitete Linse bzw. den Linsenträger auf, so dass nun die Bearbeitungseinrichtung und deren Fördereinrichtung frei sind, um die nächste Linse bzw. den nächsten Linsenträger von einem Transfersystem, insbesondere einer vorgeordneten Transfereinrichtung, aufzunehmen. Hierdurch können Leerlaufzeiten minimiert und damit eine optimierte Ausnutzung bzw. ein optimierter Durchsatz erreicht werden.

Insbesondere sind die Transfereinrichtungen und die Fördereinrichtungen der Bearbeitungseinrichtungen zur unabhängigen Förderung der Linsen bzw. Linsenträger unabhängig steuerbar bzw. antreibbar. Je nach erforderlicher Bearbeitung können die Fördereinrichtungen die jeweilige Linse bzw. den jeweiligen Linsenträger beispielsweise anhalten, vorwärts bewegen oder bedarfsweise sogar rückwärts bewegen. Dies ermöglicht eine sehr hohe Flexibilität bei der Bearbeitung. Gleichwohl wird aus den Fördereinrichtungen der Bearbeitungseinrichtungen und den Transfereinrichtungen gemäß der vorliegenden Erfindung vorzugsweise eine geradlinige und/oder durchgehende (erste) Transportspur für die Linsen bzw. Linsenträger gebildet. Dies gestattet einen kompakten Aufbau.

Die Transfereinrichtungen sind vorzugsweise zur wahlweisen Weiterförderung an eine nachfolgende Fördereinrichtung bzw. Bearbeitungseinrichtung oder an die zweite Transportspur ausgebildet, bilden also jeweils vorzugsweise eine Weiche. Die Transfereinrichtungen gestatten also vorzugsweise einen Wechsel von der ersten Transportspur zur zweiten Transportspur. Insbesondere gestatten die Transfereinrichtungen aber auch einen umgekehrten Wechsel von der zweiten Transportspur zur ersten Transportspur. Dies gestattet einen einfachen Aufbau und einen sehr flexiblen Ablauf, da Linsen bzw. Linsenträger je nach Bedarf zwischen den Transportspuren wechseln können. Die zweite Transportspur kann insbesondere als Umgehungsspur eingesetzt werden, um einzelne Bearbeitungseinrichtungen umgehen zu können.

Die zweite Transportspur verläuft vorzugsweise parallel zu der ersten Transportspur und/oder zumindest im wesentlichen geradlinig.

Die zweite Transportspur ist vorzugsweise unabhängig von der ersten Transportspur steuerbar.

Die zweite Transportspur ist vorzugsweise aus mehreren, insbesondere unabhängig von einander steuerbaren bzw. antreibbaren Fördereinrichtungen aufgebaut, die hintereinander mit ggfs. dazwischen angeordneten Transfereinrichtungen oder Wechseleinrichtungen die zweite Transportspur bilden. Dies gestattet eine optimierte Förderung, wobei insbesondere Linsen oder Linsenträger auf einer Fördereinrichtung der zweiten Transportspur unabhängig von der Förderung anderer Linsen oder Linsenträger auf einer anderen Fördereinrichtung der zweiten Transportspur förderbar bzw. transportierbar sind.

Vorzugsweise weisen die Transfereinrichtungen jeweils einen Aufnahmebereich zur temporären Zwischenspeicherung von mindestens einer Linse oder mindestens einem Linsenträger auf. So kann eine Aufnahme und Zwischenspeicherung einer Linse bzw. eines Linsenträgers nach vorheriger Bearbeitung in einer Bearbeitungseinrichtung erfolgen. Wahlweise kann die Linse bzw. der Linsenträger zu gegebener Zeit an eine andere Bearbeitungseinrichtung oder an eine andere Transortspur oder Fördereinrichtung des Transfersystems weitergeleitet bzw. weitergefördert werden. Alternativ oder zusätzlich kann diese Aufnahme bzw. Zwischenspeicherung auch dazu dienen, dass eine andere Linse oder ein anderer Linsenträger durch entsprechende Querförderung zusätzlich von der Transfereinrichtung aufgenommen und an eine nachgeordnete Bearbeitungseinrichtung bzw. deren Fördereinrichtung (zuerst) weitergeleitet bzw. weitergefördert werden kann. Nachfolgend kann die Linse bzw. der Linsenträger aus dem Aufnahmebereich dann wahlweise an die nachgeordnete Bearbeitungseinrichtung oder an eine andere Fördereinrichtung bzw. Transportspur weitergeleitet bzw. weitergefördert werden. Dementsprechend wird eine sehr flexible und bedarfsgerechte Bearbeitung ermöglicht.

Besonders bevorzugt bilden die Transfereinrichtungen bzw. deren Aufnahmebereich entsprechende Aufnahmepuffer für Linsen bzw. Linsenträger. Hierdurch ist es beispielsweise möglich, dass andere Fördereinrichtungen bzw. eine zweite Transportspur oder weitere Transportspuren des Transfersystems zumindest im Wesentlichen kontinuierlich fördern können. Dies ermöglicht eine wesentliche Vereinfachung der Steuerung.

Die zweite Transportspur und entsprechende Verbindungen oder Querfördereinrichtungen zwischen der ersten und zweiten Transportspur, besonders bevorzugt zwischen jeder Bearbeitungseinrichtung, ermöglichen ein bedarfsweises Überholen von Linsen bzw. Linsenträgern, beispielsweise für eine Bearbeitung von Linsen mit besonderer Priorität, und/oder ein Umgehen oder Auswählen von bestimmten Bearbeitungen bzw. Bearbeitungseinrichtungen. Beispielsweise kann eine Linse aus Polykarbonat an eine hierfür besonders geeignete bzw. eingerichtete Bearbeitungseinrichtung gefördert werden, während eine aus einem anderen Material, beispielsweise CR 39, bestehende Linse an eine andere, hierfür geeignete bzw. eingerichtete Bearbeitungseinrichtung gefördert werden kann.

Gemäß einem bevorzugten Aspekt der vorliegenden Erfindung ist die Förderrichtung der zweiten Transportspur und/oder der Transfereinrichtungen und/oder der Fördereinrichtungen der Bearbeitungseinrichtungen umkehrbar. Dies gestattet einen kompakten Aufbau und eine hohe Flexibilität bei der Bearbeitung.

Gemäß einem weiteren Aspekt der vorliegenden Erfindung weist das Transfersystem vorzugsweise zusätzlich eine dritte Transportspur zur parallelen Förderung, insbesondere Rückförderung, von Linsen oder Linsenträgern auf. Insbesondere weisen die zweite und dritte Transportspur zueinander entgegengesetzte Förderrichtungen auf. Die dritte Transportspur verläuft vorzugsweise ebenfalls zumindest im wesentlichen gradlinig und/oder parallel zu den anderen Transportspuren. Dies gestattet einen kompakten Aufbau und eine optimierte Förderung und damit eine optimierte Bearbeitung und Auslastung von Bearbeitungsmaschinen.

Die dritte Transportspur ist vorzugsweise ähnlich oder entsprechend wie die zweite Transportspur aufgebaut. Vorzugsweise ist die dritte Transportspur aus mehreren hintereinander bzw. in Serie angeordneten Fördereinrichtungen mit bedarfsweise dazwischen angeordneten Transfer- oder Wechseleinrichtungen aufgebaut. Die Fördereinrichtungen sind vorzugsweise wieder zur unabhängigen Förderung von Linsen bzw. Linsenträgern unabhängig voneinander steuerbar.

Vorzugsweise sind Wechseleinrichtungen zum Wechseln zwischen der zweiten und dritten Transportspur bzw. den Transportspuren vorgesehen. Die Wechseleinrichtungen können von den Transfereinrichtungen gebildet oder davon getrennt bzw. unabhängig sein.

Die Wechseleinrichtungen weisen vorzugsweise Fördereinrichtungen zur Querförderung mindestens einer Linse oder eines Linsenträgers zum Wechseln zwischen zweiter und dritter Transportspur bzw. den Transportspuren auf.

Alternativ oder zusätzlich zur dritten Transportspur weist das Transfersystem gemäß einem weiteren Aspekt der vorliegenden Erfindung vorzugsweise eine Rückförderverbindung zur Rückförderung bzw. Zirkulation von Linsen bzw. Linsenträgern auf. Die Rückförderverbindung verbindet insbesondere die erste oder zweite Transportspur, besonders bevorzugt im Bereich des Anfangs und Endes und/oder zur Bildung eines Kreislaufs bzw. der Möglichkeit zur Kreisförderung bzw. Zirkulation.

Mittels der zweiten Transportspur in Verbindung mit der dritten Transportspur und/oder Rückförderverbindung ist es insbesondere möglich, einzelne, mehrere oder alle Bearbeitungseinrichtungen wiederholt und/oder in beliebiger Reihenfolge anzufahren, insbesondere also die Reihenfolge der Bearbeitungen zu variieren bzw. beliebig zu wählen, die Auslastung der Bearbeitungseinrichtungen zu variieren bzw. zu optimieren und/oder die Bearbeitungsabläufe zu optimieren.

Die Möglichkeit der Rückförderung durch Umkehr der Förderrichtung und/oder über die dritte Transportspur bzw. über die Rückförderverbindung vereinfacht insbesondere eine Erweiterung der vorschlagsgemäßen Anlage. Weitere Bearbeitungseinrichtungen können nämlich einfach am Ende der Anlage bzw. Transportspuren über entsprechende Verlängerungen der Transportspuren angeschlossen werden. So kann beispielsweise die Kapazität für bestimmte Bearbeitungen je nach Bedarf durch entsprechende zusätzliche Bearbeitungseinrichtungen erhöht werden. Diese zusätzlichen Bearbeitungseinrichtungen können dann über die Transportspuren bedarfsgerecht mit den Linsen bzw. Linsenträgern versorgt bzw. angefahren werden. Zwischen den zusätzlichen Bearbeitungseinrichtungen werden dann vorzugsweise wiederum die vorschlagsgemäßen Transfereinrichtungen angeordnet. Nach erfolgter Bearbeitung in einer zusätzlichen Bearbeitungseinrichtung kann je nach Bedarf eine Rückförderung, beispielsweise für eine weitere Bearbeitung oder zur Ausgabe, beispielsweise an einer Abgabestation der ursprünglichen Anlage, erfolgen. Folglich ist kein Umbau oder ein nur geringer Umbau der ursprünglichen Anlage bei einer Erweiterung erforderlich. Dementsprechend wird eine sehr einfache, schnelle und kostengünstige Erweiterung der vorschlagsgemäßen Anlage ermöglicht.

Gemäß einem besonders bevorzugten Aspekt der vorliegenden Erfindung werden die Linsen bzw. Linsenträger zirkuliert bzw. in einem Kreislauf gefördert, insbesondere um diese zwischenzulagern und/oder Stauungen vor Bearbeitungseinrichtungen zu vermeiden. Dies erfolgt vorzugsweise in der zweiten Transportspur in einer Richtung und in der dritten Transportspur in entgegengesetzter Richtung, wobei entsprechende Querförderungen oder Querverbindungen zwischen diesen beiden Transportspuren benutzt werden, um die gewünschte Zirkulation bzw. Kreislaufförderung zu ermöglichen. So können diese Transportspuren zur Speicherung bzw. Zwischenspeicherung der Linsen bzw. Linsenträger verwendet werden. Alternativ oder zusätzlich können hierdurch unerwünschte Stauungen vermieden werden. Insbesondere werden Linsen bzw. Linsenträger aus dem Kreislauf bzw. aus der Zirkulation ausgeschleust, wenn eine gewünschte Bearbeitungseinrichtung zur Verfügung steht. Das Ausschleusen erfolgt insbesondere über eine entsprechende Querförderung und/oder durch einen Wechsel in die erste Transportspur bzw. durch einen Wechsel zu einer der gewünschten Bearbeitungseinrichtung zugeordneten oder vorgeordneten Transfereinrichtung.

Die Transfereinrichtungen weisen vorzugsweise jeweils eine Fördereinrichtung zur Längsförderung mindestens einer Linse oder eines Linsenträgers parallel zu einer der Transportspuren und zusätzlich eine Fördereinrichtung zur Querförderung mindestens einer Linse oder eines Linsenträgers zum Wechseln der Transportspur auf. Diese Fördereinrichtungen sind vorzugsweise unabhängig voneinander steuerbar. Dies gestattet eine optimale Förderung, wobei insbesondere die bevorzugte temporäre Aufnahme bzw. Zwischenspeicherung mindestens einer Linse oder Linsenträgers insbesondere auf der Fördereinrichtung zur Längsförderung - besonders bevorzugt in einem Aufnahmebereich vor bzw. stromauf der zugeordneten Fördereinrichtung zur Querförderung - erfolgt, wobei die Fördereinrichtung zur Längsförderung dann ausreichend lang ausgebildet ist.

Die Fördereinrichtungen zur Querförderung der Transfereinrichtungen bzw. Wechseleinrichtungen oder Teile bzw. Abschnitte davon sind vorzugsweise mittels zugeordneter Hubeinrichtungen wahlweise anhebbar und absenkbar. So kann auf sehr einfache Weise die Querförderung bedarfsweise dann zum Einsatz gebracht werden, wenn diese auch tatsächlich gebraucht wird. Dies gilt insbesondere, wenn die Fördereinrichtungen als Band- oder Gurtförderer ausgebildet sind.

Vorzugsweise sind einzelne oder alle Fördereinrichtungen als Band- oder Gurtförderer ausgebildet. Dies gestattet einen einfachen und kostengünstigen Aufbau und eine sichere Förderung der Linsen bzw. Linsenträger.

Besonders bevorzugt werden die Linsen zwischen den Bearbeitungseinrichtungen bzw. von den Transfersystemen nur mittels Linsenträgern oder in Linsenträgern transportiert.

Als Linsenträger werden besonders bevorzugt Transportkisten eingesetzt.

Die Linsenträger nehmen vorzugsweise jeweils mindestens eine Linse, insbesondere zwei Linsen bzw. ein Linsenpaar, insbesondere zwei zusammengehörende Brillengläser für eine Brille, auf.

Das Transfersystem bzw. deren Komponenten, wie die Transfereinrichtungen, die optionalen Wechseleinrichtungen und/oder die sonstigen Fördereinrichtungen (nicht die Fördereinrichtungen der Bearbeitungseinrichtungen) sind vorzugsweise über ein Bussytem an eine Steuereinrichtung des Transfersystems, beispielsweise eine speicherprogrammierbare Steuerung, angeschlossen bzw. anschließbar und darüber steuerbar. Dies ermöglicht einen sehr einfachen Aufbau und ermöglicht insbesondere eine sehr einfache Erweiterung der Anlage, insbesondere eine Hinzufügung weiterer Bearbeitungseinrichtungen und einen entsprechenden Anschluss weiterer Komponenten an das Transfersystem.

Besonders bevorzugt wird ein Kabel mit Versorgungsleitungen und Steuerleitungen verwendet, an das die Fördereinrichtungen oder sonstigen Komponenten des Transfersystems bzw. die Transfereinrichtungen und/oder die Bearbeitungseinrichtungen anschließbar sind. Dies erleichtert einen einfachen und modularen Aufbau bzw. einen einfachen Anschluss und/oder eine Erweiterung der Anlage.

Ein vorschlagsgemäßes Verfahren zum Bearbeiten zeichnet sich insbesondere dadurch aus, dass die Linsen oder Linsenträger mit den Linsen verschiedenen Bearbeitungseinrichtungen zur unabhängigen Bearbeitung der Linsen wahlweise zugefördert werden, wobei die Linsen oder Linsenträger von Fördereinrichtungen in den Bearbeitungseinrichtungen unabhängig gefördert werden, wobei die Linsen oder Linsenträger von Transfereinrichtungen zwischen den Bearbeitungseinrichtungen temporär aufgenommen und wahlweise an die nächste Bearbeitungseinrichtung oder eine parallele Transportspur weiter gefördert werden. Hierbei werden die Transfereinrichtungen von einer vorzugsweise zentralen oder gemeinsamen Steuereinrichtung gesteuert, wobei die Fördereinrichtungen der Bearbeitungseinrichtungen hingegen vorzugsweise von der jeweiligen Bearbeitungseinrichtung oder deren Maschinensteuerung gesteuert werden. Dies vereinfacht die Steuerung und gestattet insbesondere eine optimierte Bearbeitung bei den einzelnen Bearbeitungseinrichtungen. Weiter werden hierdurch eine Erweiterung der Anlage und ein Anschluss von weiteren Bearbeitungseinrichtungen wesentlich erleichtert.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung bevorzugter Ausführungsbeispiele anhand der Zeichnung. Es zeigt:
- Fig. 1: einen schematischen Darstellung einer vorschlagsgemäßen Anlage mit mehreren Bearbeitungseinrichtungen und dazwischen angeordneten Transfereinrichtungen;
- Fig. 2: eine schematische Darstellung eines Linsenträgers mit zu bearbeitenden Linsen;
- Fig. 3: eine Transfereinrichtung der vorschlagsgemäßen Anlage in einer ausschnittsweisen Vergrößerung von Fig. 1;
- Fig. 4: eine Wechseleinrichtung der vorschlagsgemäßen Anlage zum Wechseln zwischen Transportspuren in einer ausschnittsweisen Vergrößerung von Fig. 1;
- Fig. 5: eine schematische Darstellung der vorschlagemäßen Anlage gemäß eines anderen Ausführungsbeispiels;
- Fig. 6: eine schematische Darstellung der vorschlagsgemäßen Anlage gemäß eines weiteren Ausführungsbeispiels;
- Fig. 7: eine schematische Darstellung der vorschlagsgemäßen Anlage gemäß noch eines anderen Ausführungsbeispiels;
- Fig. 8: eine schematische Darstellung der vorschlagsgemäßen Anlage gemäß eines weiteren Ausführungsbeispiels: und
- Fig. 9: ein schematisches Blockschaltbild eines bevorzugten Steuerungsaufbaus einer vorschlagsgemäßen Anlage.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

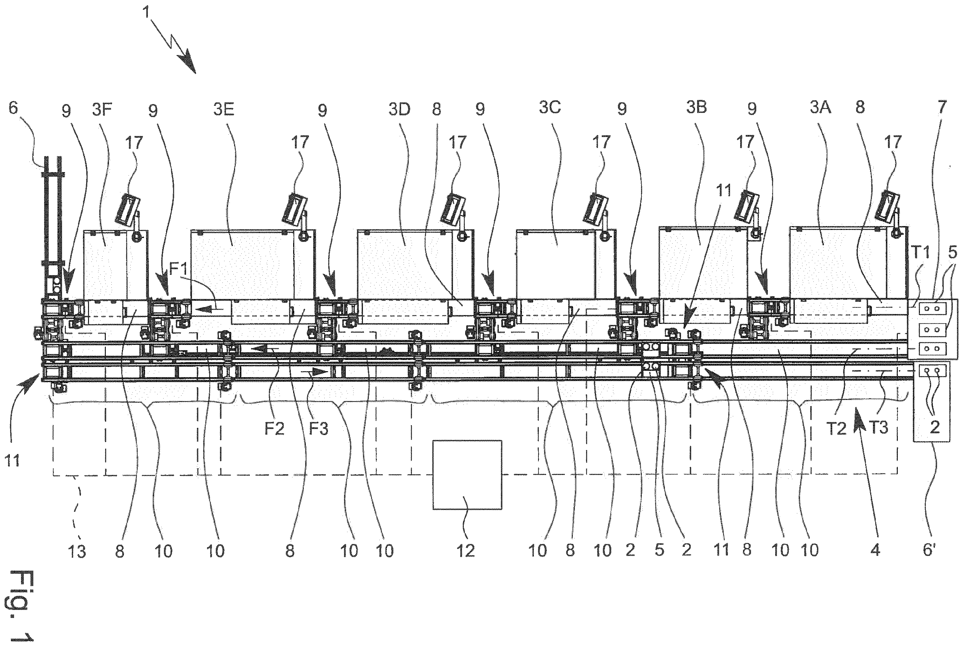

Fig. 1 zeigt in einer schematischen Darstellung eine vorschlagsgemäße Vorrichtung bzw. Anlage 1 zur Bearbeitung von optischen Linsen 2, also eine Linsenbearbeitungsanlage. Nachfolgend wird als besonders bevorzugtes Ausführungsbeispiel primär auf die Bearbeitung von Linsen für Brillen bzw. von Brillengläsern näher eingegangen. Vorzugsweise gelten diese Ausführungen jedoch entsprechend auch für das Bearbeiten sonstiger Linsen 2 oder generell optischer Werkstücke.

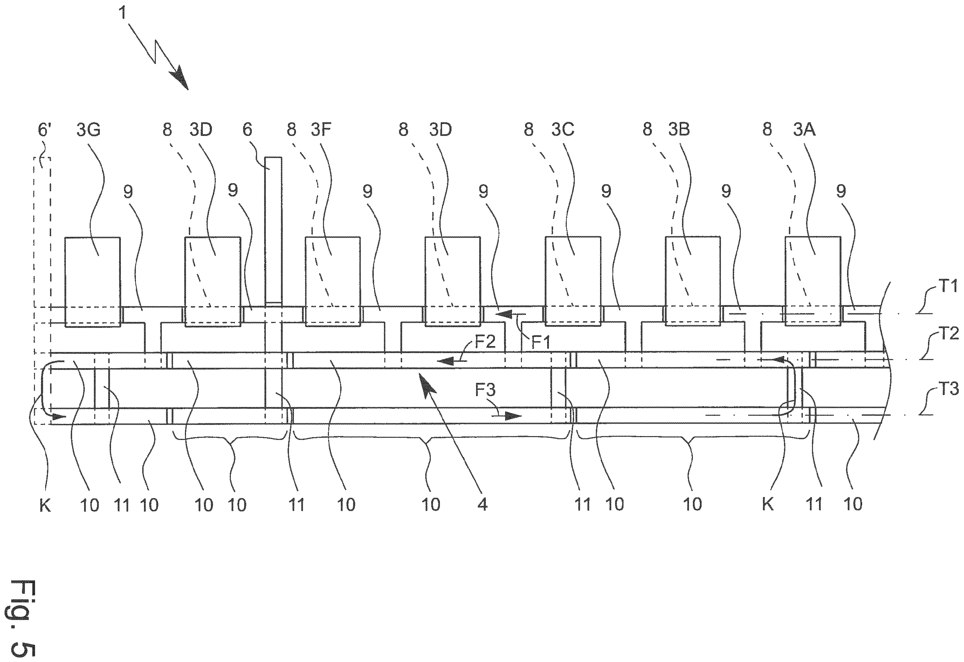

Die Anlage 1 weist mehrere separate Bearbeitungseinrichtungen 3 zur unabhängigen Bearbeitung der Linsen 2 auf. Beispielsweise kann die Anlage 1 insbesondere mindestens eine Bearbeitungseinrichtung 3A zum Blocken (temporäres Verbinden mit einem Halter) von Linsen 2, eine Bearbeitungseinrichtung 3B zum Zwischenlagern von Linsen 2 (vorzugsweise zum Abkühlen nach dem Blocken), eine Bearbeitungseinrichtung 3C zur formgebenden, insbesondere spanenden oder fräsenden Bearbeitung von Linsen 2, eine Bearbeitungseinrichtung 3D zum Polieren von Linsen 2, eine Bearbeitungseinrichtung 3E zum Prüfen bzw. Messen von Linsen 2, eine Bearbeitungseinrichtung 3F zum Markieren von Linsen 2 und/oder eine Bearbeitungseinrichtung 3G zum Beschichten von Linsen 2 (in Fig. 5 angedeutet) aufweisen.

Bedarfsweise können auch mehrere gleichartige Bearbeitungseinrichtungen 3, beispielsweise zwei oder mehr Bearbeitungseinrichtungen 3 für die gleiche Bearbeitung vorhanden bzw. in die Anlage 1 integriert sein. Beispielsweise können mehrere Bearbeitungseinrichtungen 3C zur formgebenden Bearbeitung, mehrere Bearbeitungseinrichtungen 3D zum Polieren, usw. vorgesehen sein. Dies hängt insbesondere von dem Durchsatz der verschiedenen Bearbeitungseinrichtungen 3 und/oder den gewünschten Bearbeitungen ab. Ein besonderer Vorteil der vorschlagsgemäßen Anlage 1 besteht nämlich darin, dass zusätzliche Bearbeitungseinrichtungen 3 auch später je nach Bedarf noch in die Anlage 1 sehr leicht integriert bzw. eingebunden werden können, Erweiterungen also sehr einfach erfolgen können.

Die Anlage 1 weist vorzugsweise ein Transfersystem 4 zum Transport der Linsen 2 bzw. von Linsenträgern 5 mit den Linsen 2 zu und von den Bearbeitungseinrichtungen 3 auf. Das Transfersystem 4 führt die Linsen 2 bzw. Linsenträger 5 insbesondere den Bearbeitungseinrichtungen 3 zu und/oder transportiert bzw. fördert die Linsen 2 bzw. Linsenträger 5 nach einer erfolgten Bearbeitung in einer Bearbeitungseinrichtung 3 zu einer anderen Bearbeitungseinrichtung 3 oder zu einer Abgabestation 6. Die Abgabestation 6 kann beispielsweise als Übergabeeinrichtung, Rolltisch oder als sonstige Speichereinrichtung ausgebildet sein.

Die Anlage 1 weist neben der Abgabestation 6 vorzugsweise auch eine Aufnahmestation 7 auf, die einer Aufnahme zu bearbeitender Linsen 2 bzw. von die zu bearbeitenden Linsen 2 tragenden Linsenträgern 5 dient.

Die Abgabestation 6 ist beim Darstellungsbeispiel vorzugsweise separat von der Aufnahmestation 7, beispielsweise an einer gegengesetzten Seite, angeordnet. Jedoch können die Aufnahmestation 7 und die Abgabestation 6 bedarfsweise auch nebeneinander oder benachbart angeordnet sein, wie in Fig. 1 durch die zusätzlich als Alternative neben der Aufnahmestation 7 dargestellte Abgabestation 6' angedeutet, und/oder durch eine gemeinsame Einrichtung oder dgl. gebildet sein und/oder an beliebigen Stellen des Transfersystems 4 angeordnet sein.

Jeder Bearbeitungseinrichtung 3 ist vorzugsweise eine eigene Fördereinrichtung 8 zur insbesondere linearen Förderung mindestens einer Linse 2 oder eines Linsenträgers 5 zugeordnet. Insbesondere ist die zugeordnete Fördereinrichtung 8 in die jeweilige Bearbeitungseinrichtung 3 integriert bzw. eingebaut oder an diese angebaut. Die Fördereinrichtung 8 ist vorzugsweise als Förderband ausgebildet.

Die Fördereinrichtungen 8 der Bearbeitungseinrichtungen 3 werden vorzugsweise jeweils von der jeweiligen Bearbeitungseinrichtung 3 bzw. deren Maschinensteuerung (in Fig. 1 nicht dargestellt) gesteuert.

Besonders bevorzugt sind die Bearbeitungseinrichtungen 3 möglichst kompakt oder zumindest im wesentlichen quarderartig oder mit rechteckiger Grundfläche ausgebildet, wobei die Fördereinrichtungen 8 jeweils vorzugsweise hinten, also an einer einem Steuer- oder Bedienpult 17 der Bearbeitungseinrichtung 3 gegenüberliegenden Seite, bzw. an einer Schmalseite der jeweiligen Bearbeitungseinrichtung 3 angeordnet sind. Grundsätzlich ist jedoch auch eine sonstige Anordnung, insbesondere an einer Längsseite der jeweiligen Bearbeitungseinrichtung 3 möglich.

Besonders bevorzugt ragen die Fördereinrichtungen 8 seitlich über die jeweilige Bearbeitungseinrichtung 3 nicht oder nur gering und/oder um ein einheitliches Maß vor. Insbesondere entspricht die Länge der Fördereinrichtung 8 zumindest im wesentlichen der Breite der jeweiligen Bearbeitungseinrichtung 3.

Vorzugsweise wird die Gangbreite zwischen benachbarten Bearbeitungseinrichtungen 3 durch eine dazwischen angeordnete Transfereinrichtung 9 festgelegt, auf die später noch eingegangen wird. Die Gangbreite beträgt zum Beispiel etwa 60 cm. Ein Gang zwischen benachbarten Bearbeitungseinrichtungen 3 ist insbesondere für Wartungs- oder Reparaturzwecke und/oder auch zum Nachfüllen von Betriebsmitteln oder dgl. erforderlich bzw. wünschenswert.

Die Bearbeitungseinrichtungen 3 werden vorzugsweise nebeneinander angeordnet bzw. aufgestellt, so dass die Fördereinrichtungen 8 zumindest im wesentlichen in einer Linie verlaufen bzw. hintereinander liegen und/oder eine vorzugsweise zumindest im wesentlichen geradlinige erste Transportspur T1 (strichpunktiert in Fig. 1 angedeutet) bilden.

Es ist anzumerken, dass die erste Transportspur T1 und/oder eine zweite Transportspur T2 auch einem Polygonzug entsprechen, also aus verschiedenen gradlinigen Strecken bzw. Abschnitten aufgebaut sein und beispielsweise über Eck oder in U-Form verlaufen kann. Entlang dieser Abschnitte sind vorzugsweise jeweils mehrere Bearbeitungseinrichtungen 3 in einer Reihe derart angeordnet, dass diese Bearbeitungseinrichtungen 3 mit ihren Fördereinrichtungen 8 entlang dieser Strecke bzw. dieses Abschnitts angeordnet sind. Dies führt zu einer großen Flexibilität bei Erweiterung(en) der vorschlagsgemäßen Anlage 1, da insbesondere quasi beliebige Verlängerungen, insbesondere beim Anbau oder Ausbau der Anlage 1, insbesondere durch Einbindung zusätzlicher Bearbeitungseinrichtungen 3, und/oder bei entsprechendem Ausbau des Transfersystems 4 ermöglicht werden.

Das Transfersystem 4 weist vorzugsweise Transfereinrichtungen 9 auf, die jeweils zwischen zwei benachbarten Bearbeitungseinrichtungen 3 (einer Reihe) angeordnet sind. Vorzugsweise sind Transfereinrichtungen 9 zwischen einigen oder allen (unmittelbar) benachbarten Bearbeitungseinrichtungen 3 angeordnet.

Die Transfereinrichtungen 9 sind vorzugsweise jeweils zur Aufnahme und temporären Zwischenspeicherung mindestens einer Linse 2 oder eines Linsenträgers 5 und außerdem zur bedarfsweisen Weiterförderung dieser Linse 2 bzw. dieses Linsenträgers 5 wahlweise an die Fördereinrichtung 8 einer nachfolgenden Bearbeitungseinrichtung 3 oder an eine zweite Transportspur T2 der Anlage 1 bzw. des Transfersystems 4 ausgebildet.

Die zweite Transportspur T2 verläuft vorzugsweise ebenfalls wie die erste Transportspur T1 zumindest im wesentlichen geradlinig oder polygonartig und/oder parallel zu der ersten Transportspur T1.

Die Aufnahmestation 7 ist vorzugsweise zur Aufnahme von zu bearbeitenden Linsen 2 bzw. Linsenträgern 5 mit den zu bearbeitenden Linsen 2 ausgebildet. Die Aufnahmestation 7 kann insbesondere derart ausgebildet sein, dass diese die zu bearbeitenden Linsen 2 bzw. die Linsenträger 5 wahlweise an die Transportspur T1 oder T2 ausgibt.

Das Transfersystem 4 weist vorzugsweise mehrere Fördereinrichtungen 10 auf, die insbesondere in Reihe bzw. hintereinander angeordnet sind, um die zweite Transportspur T2 zu bilden. Die Linsen 2 bzw. Linsenträger 5 können also entlang dieser zweiten Transportspur T2 mittels einer oder mehrerer Fördereinrichtungen 10 transportiert bzw. gefördert werden.

Die Fördereinrichtungen 10 der zweiten Transportspur T2 sind vorzugsweise unabhängig voneinander steuerbar, um Linsen 2 bzw. Linsenträger 5 unabhängig voneinander bzw. abschnittsweise auch entlang der zweiten Transportspur T2 fördern zu können. Beispielsweise kann eine Linse 2 bzw. einen Linsenträger 5 auf einer Fördereinrichtung 10 angehalten werden, während eine andere Linse 2 bzw. ein anderer Linsenträger 5 auf einer anderen Fördereinrichtung 10 der zweiten Transportspur T2 weiter gefördert wird.

Es ist aufgrund des vorzugsweise segmentartigen oder abschnittsweisen Aufbaus der zweiten Transportspur T2 bzw. aufgrund des Einsatzes unabhängig steuerbarer Fördereinrichtungen 10 für die zweite Transportspur T2 auch möglich, dass einzelne Fördereinrichtungen 10 entgegengesetzt zur Förderrichtung F1 der ersten Transportspur T1 also rückwärts fördern, während andere Fördereinrichtungen 10 der zweiten Transportspur T2 beispielsweise anhalten oder weiter vorwärts fördern.

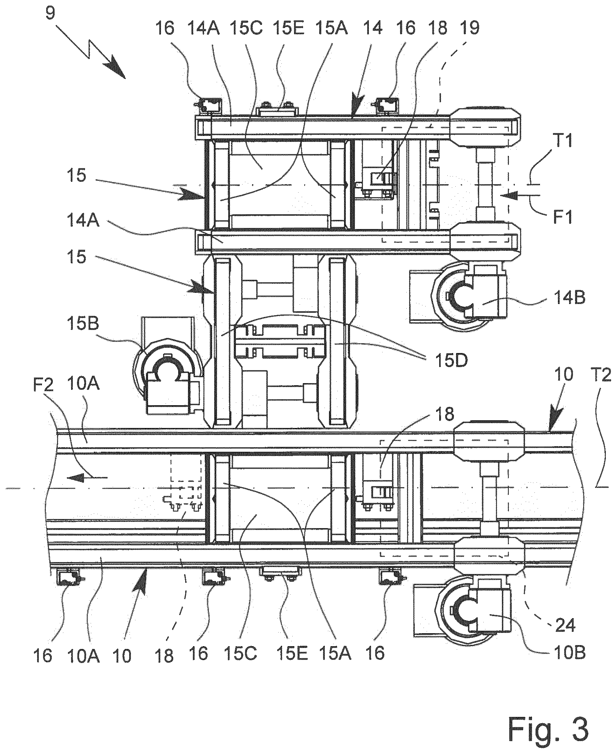

Alternativ oder zusätzlich zu der unterschiedlichen Steuerung von Fördereinrichtungen 10 der zweiten Transportspur T2 und/oder einer Rückwärtsförderung kann ein Anhalten einzelner Linsen 2 bzw. Linsenträger 5 auch durch entsprechende Stoppeinrichtungen o. dgl. (siehe beispielsweise Stoppeinrichtungen 18 in der Transportspur T2 in Fig. 3) realisiert werden, so dass in diesem Fall die Fördereinrichtung(en) 10 weiter bzw. kontinuierlich betrieben werden kann bzw. können. Dies gilt vorzugsweise für einige oder alle, Transportspuren bzw. Fördereinrichtungen.

Zwischen den Fördereinrichtungen 10 der zweiten Transportspur T2 können bedarfsweise die Transfereinrichtungen 9 angeordnet sein. Jedoch können die Transfereinrichtungen 9 alternativ auch direkt auf eine zugeordnete Fördereinrichtung 10 der zweiten Transportspur T2 fördern. In diesem Fall können die Fördereinrichtungen 10 hintereinander ohne Zwischenschaltung von Transfereinrichtungen 9 angeordnet werden, wie in Fig. 1 und 3 angedeutet.

Die Förderrichtung der ersten Transportspur T1 ist in Fig. 1 durch einen Pfeil F1 angedeutet. Die zweite Transportspur T2 fördert vorzugsweise in die gleiche Richtung, wie durch Pfeil F2 angedeutet. Die zweite Transportspur T2 dient dabei insbesondere dazu, dass Linsen 2 bzw. Linsenträger 5 an einzelnen Bearbeitungseinrichtungen 3 vorbei gefördert werden können. Beispielsweise kann eine solche Vorbeiförderung zur besseren Auslastung von Bearbeitungseinrichtungen 3, zur Förderung zu einer bestimmten Bearbeitungseinrichtung 3 für eine spezielle Bearbeitung, aufgrund eines Ausfalls oder einer Auslastung einer Bearbeitungseinrichtung 3 oder aufgrund einer nicht erforderlichen Bearbeitung durch eine Bearbeitungseinrichtung 3, gewünscht oder erforderlich sein. Alternativ oder zusätzlich kann die Vorbeiförderung auch einem Überholen von anderen Linsen 2 bzw. Linsenträgern 5 dienen, beispielsweise wenn eine vorrangige Bearbeitung einer bestimmten Linse 2 oder mehrerer bestimmter Linsen 2 erfolgen soll.

Vorzugsweise können die Linsen 2 bzw. Linsenträger 5 mittels der Transfereinrichtungen 9 zwischen der ersten und zweiten Transportspur T1, T2 wechseln. Insbesondere ist ein solcher Wechsel zwischen jeder der Bearbeitungseinrichtungen 3 und/oder mittels jeder Transfereinrichtung 9 und/oder in jede Richtung, also von der ersten zur zweiten Transportspur T1, T2 und umgekehrt, möglich.

Die Anlage 1 bzw. das Transfersystem 4 weist vorzugsweise eine dritte Transportspur T3 auf, die vorzugsweise zumindest im wesentlichen geradlinig und/oder parallel zu den anderen Transportspuren T1 und T2 verläuft.

Die Förderrichtung F3 der dritten Transportspur T3 ist vorzugsweise den Förderrichtungen F1 und F2 der anderen Transportspuren T1 und T2 entgegen gerichtet bzw. verläuft vorzugsweise rückwärts. Die Transportspur T3 dient also insbesondere einer Rückförderung oder entgegengesetzten Förderung von Linsen 2 bzw. Linsenträgern 5, beispielsweise zur Wiedereinschleusung (über entsprechende Wechselmöglichkeiten) in die erste oder zweite Transportspur T1, T2 für eine weitere Bearbeitung oder zur Rückförderung beispielsweise zur Abgabestation 6'.

Die dritte Transportspur T3 ist vorzugsweise entsprechend oder ähnlich wie die zweite Transportspur T2, besonders bevorzugt aus mehreren in einer Linie bzw. hintereinander angeordneten Fördereinrichtungen 10 aufgebaut, wie in Fig. 1 angedeutet. Die Fördereinrichtungen 10 der dritten Transportspur T3 sind vorzugsweise wieder unabhängig voneinander steuerbar bzw. antreibbar, so dass eine unabhängige Förderung von Linsen 2 bzw. Linsenträgern 5 entlang der dritten Transportspur T3 möglich ist, so wie dies grundsätzlich bereits für die zweite Transportspur T2 oben beschrieben wurde, so dass die diesbezüglichen Ausführungen insbesondere entsprechend oder ergänzend gelten.

Alternativ oder zusätzlich zu der unterschiedlichen Steuerung von Fördereinrichtungen 10 der dritten Transportspur T3 und/oder zu einer Rückwärtsförderung kann ein Anhalten einzelner Linsen 2 bzw. Linsenträger 5 auch durch entsprechende Stoppeinrichtungen o. dgl. (nicht dargestellt) realisiert werden, so dass in diesem Fall die Fördereinrichtung(en) 10 weiter bzw. kontinuierlich betrieben werden kann bzw. können.

Die Anlage 1 bzw. das Transfersystem 4 weist vorzugsweise Wechseleinrichtungen 11 zum Wechseln zwischen Transportspuren T, insbesondere zwischen der zweiten Transportspur T2 und dritten Transportspur T3, also wahlweise von der zweiten Transportspur T2 zur dritten Transportspur T3 und umgekehrt, auf. Die Wechseleinrichtungen 11 können in den beiden Transportspuren T2 und T3 jeweils zwischen den Fördereinrichtungen 10 angeordnet sein. In diesem Fall dienen die Wechseleinrichtungen 11 auch einer gewissen Weiterförderung in Richtung der jeweiligen Förderrichtung F2 bzw. F3, also der Längsförderung. Alternativ können die Wechseleinrichtungen 11 jedoch auch in zugeordnete Fördereinrichtungen 10 integriert sein bzw. mit diesen derart zusammen wirken, dass die Wechselrichtungen 11 lediglich der Querförderung, also lediglich dem Fördern zwischen den jeweiligen Transportspuren T2 und T3 dienen. Dies Art der Integration ist bevorzugt und beim Darstellungsbeispiel gezeigt.

Die Transfereinrichtungen 9 sind beim Darstellungsbeispiel vorzugsweise entsprechend in die zweite Transportspur T2 bzw. in die zugeordnete Fördereinrichtung 10 der zweiten Transportspur T2 integriert. Mit anderen Worten bewirken die Transfereinrichtungen 9 beim Darstellungsbeispiel vorzugsweise keine Längsförderung oder Weiterförderung in der zweiten Transportspur T2 in die Förderrichtung F2.

Die Wechseleinrichtungen 11 und die Transfereinrichtungen 9 können auch kombiniert bzw. in Verlängerung angeordnet sein bzw. eine Baueinheit bilden, wie in Fig. 1 im Bereich der Abgabestation 6 beispielhaft angedeutet.

Alternativ können alle oder einzelne Transfereinrichtungen 9 oder Wechseleinrichtungen 11 auch derart ausgebildet sein, dass diese zusätzlich eine wahlweise Querförderung bis zur optionalen Transportspur T3 und/oder einen bedarfsweisen Wechsel zwischen allen Transportspuren T1 bis T3 bzw. zwischen den Transportspuren T1 und T3 ermöglichen.

Vorzugsweise weist die Anlage 1 im Bereich eines Endes bzw. der Abgabestation 6, insbesondere wenn diese von der Aufgabestation 7 räumlich getrennt ist, eine zugeordnete Transfereinrichtung 9 und/oder Wechseleinrichtung 11 auf, wie in Fig. 1 angedeutet.

Vorzugsweise sind Wechseleinrichtungen 11 im Bereich des Anfangs und des Endes der dritten Transportspur T3 und/oder dazwischen eine oder mehrere angeordnet, insbesondere um einen Kreislauf bzw. eine Zirkulation oder Kreisförderung K von Linsen 2 bzw. Linsenträgern 5 zu ermöglichen, wie in Fig. 5, 6 und 7 angedeutet.

Die Anlage 1 bzw. das Transfersystem 4 weist vorzugsweise eine Transfersteuerung bzw. Steuereinrichtung 12 - insbesondere eine speicherprogrammierbare Steuerung - zur Steuerung der Transfereinrichtungen 9 und/oder Fördereinrichtungen 10 sowie, sofern vorhanden, der Wechseleinrichtungen 11 und optional der Aufnahmestation 7 und/oder Abgabestation 6 auf, wie in Fig. 1 angedeutet. Der Anschluss erfolgt besonders bevorzugt über ein Bussystem 13, das in Fig. 1 gestrichelt angedeutet ist. Insbesondere erfolgt über das Bussystem 13 die Energieversorgung und/oder Steuerung. Besonders bevorzugt weist das Bussystem 13 ein alle Versorgungsleitungen und/oder Steuerleitungen enthaltendes Buskabel auf.

Bei einer Erweiterung der Anlage 1 können weitere Komponenten, wie Transfereinrichtungen 9, Fördereinrichtungen 10 oder Wechseleinrichtungen 11, einfach direkt an das Bussystem 13 bzw. Buskabel angeschlossen werden. Dementsprechend ist ein Ausbau der Anlage 1 bzw. des Transfersystems 4, ggfs. auch ein Umbau, sehr einfach möglich.

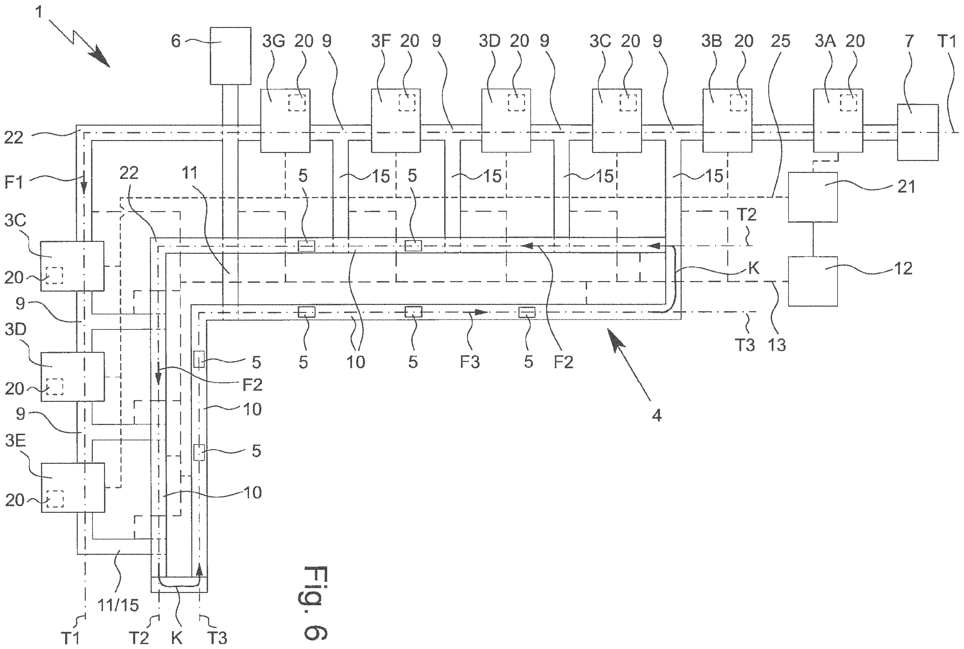

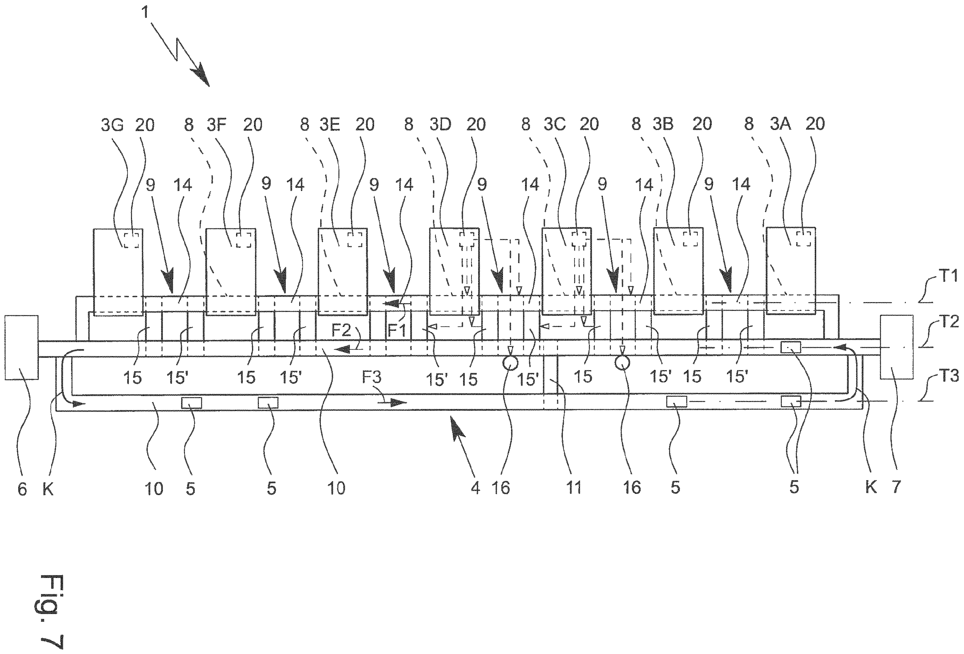

Vorzugsweise erfolgt also eine gemeinsame bzw. zentrale Steuerung des Transfersystems 4. Die den Bearbeitungseinrichtungen 3 zugeordneten Fördereinrichtungen 8 bilden vorzugsweise jedoch keinen Teil des Transfersystems 4 bzw. der Transfersteuerung. Stattdessen werden die Fördereinrichtungen 8 der Bearbeitungseinrichtungen 3 vorzugsweise von den Bearbeitungseinrichtungen 3 selbst bzw. direkt oder von deren Maschinensteuerungen (vgl. Maschinensteuerungen 20 in Fig. 6 und 7) gesteuert. Die Fördereinrichtungen 8 sind dementsprechend vorzugsweise jeweils an die zugeordnete Bearbeitungseinrichtung 3 bzw. deren Maschinensteuerung 20 zur Steuerung der jeweiligen Fördereinrichtung 8 angeschlossen.

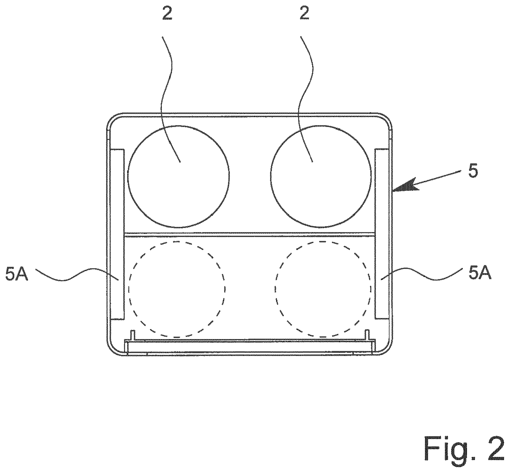

Fig. 2 zeigt in einer schematischen Draufsicht eine bevorzugte Ausführungsform eines Linsenträgers 5 zur Aufnahme von mindestens einer, beim Darstellungsbeispiel insbesondere zwei oder mehr zu bearbeitenden Linsen 2. Bei der Linsenbearbeitung bzw. Brillenglasbearbeitung werden üblicherweise zwei zu bearbeitende Linsen 2 bzw. ein Linsenpaar von einem Linsenträger 5 aufgenommen. Dies ist auch hier bevorzugt.

Der Linsenträger 5 weist vorzugsweise eine Kodierung 5A, beispielsweise einen Barcode oder dgl., mit wichtigen Bearbeitungsdaten, Daten zur Identifikation und/oder sonstigen Informationen für beide Linsen 2 oder für jede Linse 2 eine separate Kodierung 5A, wie in Fig. 2 angedeutet, auf. Besonders bevorzugt enthält die Kodierung 5A eine Identifikation oder Auftragsnummer oder dergleichen für die jeweilige Linse(n) 2, so dass mittels der Identifikation bzw. Auftragsnummer ein Bearbeitungsplan und/oder Bearbeitungsstatus bzw. erforderliche Bearbeitungsschritte, Bearbeitungsreihenfolgen, Bearbeitungsdaten und/oder sonstige Informationen, beispielsweise über ein entsprechendes Serversystem, Datenbanksystem oder dergleichen, insbesondere eine Systemsteuerung 21, wie in Fig. 6 angedeutet, bestimmbar oder davon abrufbar sind.

Vorzugsweise ist der Abstand der Linsen 2 in einem Linsenträger 5 genauso groß wie der Abstand einer Linse 2 in einem Linsenträger 5 zu der benachbarten Linse 2 in einem unmittelbar benachbarten Linsenträger 5. Dies vereinfacht die Handhabung bzw. Positionierung, insbesondere in den Bearbeitungseinrichtungen 3. Dieser Abstand beträgt bei Darstellungsbeispiel vorzugsweise 130 mm. Die Länge der Linsenträger 5 beträgt vorzugsweise das Doppelte, also hier 260 mm.

Der Linsenträger 5 ist beim Darstellungsbeispiel vorzugsweise kistenartig und/oder in der Draufsicht zumindest im Wesentlichen quadratisch ausgebildet.

Der Linsenträger 5 weist beim Darstellungsbeispiel vorzugsweise zusätzliche Lager- oder Aufnahmeplätze, beispielsweise für Werkzeuge, insbesondere Polierwerkzeuge, auf, wie in Fig. 2 gestrichelt angedeutet.

Fig. 3 zeigt in einer schematischen Darstellung bzw. Vergrößerung von Fig.1 einen bevorzugten Aufbau einer vorschlagsgemäßen Transfereinrichtung 9. Die Transfereinrichtung 9 weist vorzugsweise eine (erste) Fördereinrichtung 14 zur Längsförderung (Förderung in Richtung F einer der Transportspuren T, insbesondere der ersten Transportspur T1) und eine (zweite) Fördereinrichtung 15 zur Querförderung (Förderung quer oder senkrecht zu den Förderrichtungen F bzw. Transportspuren T bzw. zum Transportspurwechsel) auf.

Die Fördereinrichtungen 14 und 15 sind vorzugsweise ebenso wie die Fördereinrichtungen 8 und/oder 10 als Band- oder Gurtförderer ausgebildet. Beim Darstellungsbeispiel weisen die Fördereinrichtungen 10 vorzugsweise Bänder oder Gurte 10A und zugeordnete Antriebe 10B auf. Die Fördereinrichtungen 14 weisen vorzugsweise jeweils Bänder oder Gurte 14A und zugeordnete Antriebe 14B auf. Die Fördereinrichtungen 15 weisen vorzugsweise Bänder oder Gurte 15A und zugeordnete Antriebe 15B auf.

Mittels der durch den zugeordneten Antrieb 10B, 14B oder 15B antreibbaren Bänder bzw. Gurte 10A, 14A, 15A sind darauf aufliegende Linsen 2 bzw. Linsenträger 5 linear in die jeweilige Förderrichtung F bzw. bei der Querförderung quer dazu förderbar.

Die Transfereinrichtung 9 ist vorzugsweise zur Aufnahme und temporären Lagerung bzw. Speicherung mindestens einer Linse 2 oder eines Linsenträgers 5 ausgebildet und weist hierzu insbesondere einen Lager- bzw. Aufnahmebereich 19 auf, wie in Fig. 3 gestrichelt angedeutet. Dies bzw. dieser wird beim Darstellungsbeispiel vorzugsweise durch die Fördereinrichtung 14 gebildet, die eine hierfür ausreichende Länge aufweist. Insbesondere beträgt die Länge der Fördereinrichtung 14 mindestens die einfache Länge eines Linsenträgers 5, beim Darstellungsbeispiel sogar mindestens die doppelte Länge des Linsenträgers 5, um diesen vorzugsweise neben oder in Förderrichtung F1 vor oder stromauf der Fördereinrichtung 15 zur Querförderung bzw. deren Hubtisch 15C aufnehmen bzw. zwischenlagern zu können. Hierzu ist dem Aufnahmebereich 19 vorzugsweise eine geeignete Stoppeinrichtung 18 (beispielsweise mit einem in den Bewegungsweg bewegbaren oder klappbaren Anschlag bzw. ein Vereinzler) zum bedarfsweisen Anhalten des oder eines Linsenträgers 5 in dem Aufnahmebereich 19 zugeordnet. Die stoppeinrichtung 18 kann einen Linsenträger 5 - hier in dem Aufnahmebereich 19 - insbesondere auch bei weiterlaufender Fördereinrichtung 14 anhalten bzw. stoppen.

In diesem Zusammenhang ist anzumerken, dass vorzugsweise generell ein Stoppen oder Anhalten der Linsenträger 5 mittels entsprechender oder ähnlicher Stoppeinrichtungen 18 (wie beispielhaft in der zweiten Transportspur T2 in Fig. 3 dargestellt) an den gewünschten Stellen oder Positionen des Transfersystems 4 und/oder der Fördereinrichtungen 8 erfolgt, um die Linsenträger 5 individuell bzw. genau, ggf. auch bei weiterlaufenden Fördereinrichtungen 8, 10, 14 und/oder ggf. 15 bzw. Bändern oder Gurten anhalten zu können.

Vorzugsweise weist die Anlage 1 bzw. das Transfersystem 4 oder die jeweilige Fördereinrichtung 8, 10, 14, 15, Transfereinrichtung 9 und/oder Wechseleinrichtung 11 - insbesondere zusätzlich zu den Stoppeinrichtungen 18 bzw. den erwähnten nicht dargestellten Stoppeinrichtungen - geeignete Sensoren 16, wie Lichtschranken, Barcode-Leser o.dgl., auf, insbesondere um das Vorhandensein von Linsen 2 oder Linsenträgern 5 bzw. deren Position erfassen und/oder die Linsenträger 5 richtig positionieren und/oder die Linsen 2 bzw. Linsenträger 5 erfassen oder identifizieren, besonders bevorzugt Kodierungen 5A lesen zu können.

Beim Darstellungsbeispiel entspricht die Länge der Fördereinrichtung 14 bzw. der Transfereinrichtung 9 in Förderrichtung F1 zumindest im wesentlichen dem Abstand benachbarter Bearbeitungseinrichtungen 3 bzw. benachbarter Fördereinrichtungen 8 bzw. der Gangbreite zwischen benachbarter Bearbeitungseinrichtungen 3, wie bereits erwähnt, bzw. mindestens der Länge von zwei Linsenträgern 5.

Es ist anzumerken, dass die Bearbeitungseinrichtungen 3 vorzugsweise generell zumindest mit im wesentlichen gleichem Zwischenabstand aufgestellt werden. Dementsprechend können vorzugsweise baugleiche Transfereinrichtungen 9 dazwischen eingesetzt oder angeordnet werden.

Die Fördereinrichtung 15 zur Querförderung weist, wie in Fig. 3 angedeutet, bei der Transfereinrichtung 9 gemäß dem Darstellungsbeispiel vorzugsweise einen Zwischenförderer mit Bändern oder Gurten 15D zwischen den beiden Transportspuren T1 und T2 bzw. zwischen der Fördereinrichtung 14 und der benachbarten Fördereinrichtung 10 auf.

Die Fördereinrichtung 15 weist vorzugsweise einen gemeinsamen Antrieb 15B zum Antrieb der Bänder bzw. Gurte 15A und, sofern vorhanden, 15D, auf.

Die Bänder bzw. Gurte 15A sind vorzugsweise paarweise zwischen den Gurten 14A der Fördereinrichtung 14 und den Gurten 10A der Fördereinrichtung 10 angeordnet und jeweils vorzugsweise von einem Hubelement, insbesondere einem Hubtisch 15C, getragen. Das Hubelement bzw. der Hubtisch 15C bzw. die Hubelemente/Hubtische 15C und damit die zugeordneten Bänder oder Gurte 15A sind vorzugsweise mittels einer zugeordneten Hubeinrichtung (nicht dargestellt) bedarfsweise anhebbar und absenkbar.

Im Betrieb kann die Fördereinrichtung 14 einen Linsenträger 5 von einer vorgeordneten Bearbeitungseinrichtung 3 aufnehmen und temporär speichern bzw. lagern, insbesondere in dem Aufnahmebereich 19 und/oder über dem Hubtisch 15C bzw. über den Bändern bzw. Gurten 15A. Bei Bedarf kann die Transfereinrichtung 9 bzw. deren Fördereinrichtung 14 den Linsenträger 5 an die nachgeordnete Bearbeitungseinrichtung 3 weiter fördern bzw. wieder abgeben. Alternativ kann die Transfereinrichtung 9 bzw. deren Fördereinrichtung 15 den Linsenträger 5 zu der Transportspur T2 wechseln, also querfördern. In diesem Fall wird der Hubtisch 15C angehoben bis der Linsenträger 5 (in Fig. 3 nicht dargestellt) angehoben und von den Bändern bzw. Gurten 14A der Fördereinrichtung 14 abgehoben wird. Anschließend wird der Linsenträger 5 mittels der Bänder bzw. Gurte 15A - beim Darstellungsbeispiel über den optionalen Zwischenförderer bzw. die Bänder bzw. Gurte 15D - zu der zweiten Transportspur T2 bzw. auf die dortigen Bänder bzw. Gurte 15A gefördert. Vorzugsweise wird immer für die Querförderung auch der Hubtisch 15C in der Transportspur T2 bzw. in der Fördereinrichtung 10 mit bzw. gleichartig angehoben. Ein bevorzugter seitlicher Anschlag 15E, der über die Fördereinrichtung 10 bzw. deren Bänder bzw. Gurte 10A seitlich nach oben vorragt, verhindert, dass der Linsenträger 5 in Querrichtung zu weit gefördert wird bzw. das der Linsenträger 5 über die Fördereinrichtung 10 seitlich hinaus gefördert wird.

Anschließend wird die Fördereinrichtung 15 bzw. werden deren Hubtische 15C wieder abgesenkt und damit der Linsenträger 5 an die Fördereinrichtung 10 übergegeben bzw. auf deren Bänder bzw. Gurte 10A abgelegt, so dass nun eine Förderung entlang der zweiten Transportspur T2 mittels der Fördereinrichtung 10 erfolgen kann.

Beim Darstellungsbeispiel ist die Fördereinrichtung 15 zur Querförderung in die Fördereinrichtung 10 zur Längsförderung integriert, da keine separate Fördereinrichtung für die Längsförderung der Transfereinrichtung 9 in der zweiten Transportspur 10 vorgesehen ist, im Gegensatz zu der Fördereinrichtung 14 zur Längsförderung der Transfereinrichtung 9 in der ersten Transportspur T1. Jedoch kann grundsätzlich auch eine solche zusätzliche Fördereinrichtung 14 der Transfereinrichtung 9 in der zweiten Transportspur T2 vorgesehen sein.

Die Transfereinrichtung 9 kann nicht nur für einen Wechsel des Linsenträgers 5 von der ersten Transportspur T1 zu der zweiten Transportspur T2, sondern natürlich auch für den umgekehrten Wechsel, insbesondere zum Einschleusen einer Linse 2 oder eines Linsenträgers 5 in die Transportspur T1 für die Bearbeitung in einer nachfolgenden Bearbeitungseinrichtung 3, verwendet werden. In diesem Fall wird der Linsenträger 5 von der zweiten Transportspur T2 bzw. der zugeordneten Fördereinrichtung 10 über der Fördereinrichtung 15 zur Querförderung bzw. deren Hubtisch 15C in der zweiten Transportspur T2 positioniert. Die Positionierung erfolgt vorzugsweise mittels einer Stoppeinrichtung 18, beispielsweise mittels der gestrichelt dargestellten Stoppeinrichtung 18, die insbesondere in der zweiten Transportspur T2 bzw. nach dem Hubtisch 15C angeordnet ist.

Anschließend kann das Anheben der Transporttische 15C und dann die Querförderung zu der Transportspur T1 durch entsprechenden Antrieb der Bänder bzw. Gurte 15A und 15D mittels des Antriebs 15B erfolgen, bis der Linsenträger 5 auf der Fördereinrichtung 14 positioniert ist, wobei der Aufnahmebereich 19 auch von einem andere Linsenträger 5 belegt sein kann, da der Aufnahmebereich 19 vorzugsweise neben oder insbesondere vor oder stromauf der Fördereinrichtung 15 angeordnet ist. Die Positionierung des quer geförderten Linsenträgers 5 in der Transportspur T1 kann wiederum durch einen optionalen seitlichen Anschlag 15E erleichtert oder festgelegt werden.

Die Transfereinrichtung 9 dient vorzugsweise sowohl einen Einschleusen von Linsen 2 bzw. Linsenträgern 5 in die erste Transportspur T1 als auch einem Ausschleusen von Linsen 2 bzw. Linsenträgern 5 aus der Transportspur T2 in eine andere Transportspur, hier die zweite Transportspur T2.

Die Transfereinrichtung 9 ist insbesondere derart ausgebildet, dass eine Linse 2 bzw. ein Linsenträger 5 quergefördert bzw. in die erste Transportspur T1 eingeschleust werden kann, während eine andere Linse 2 bzw. ein anderer Linsenträger 5 sich im Aufnahmebereich 19 befindet bzw. dort zwischengelagert oder zwischengespeichert ist. So können Linsen 2 bzw. Linsenträger 5 auch zwischen andere Linsen 2 bzw. Linsenträger 5 in der ersten Transportspur T1 eingeschleust werden.

Weiter gestattet die Transfereinrichtung 9, wie bereits angesprochen, ein wahlweises Weiterfördern einer Linse 2 bzw. eines Linsenträgers 5 von der vorherigen Bearbeitungseinrichtung 3 (in der ersten Transportspur T1) bzw. aus dem Aufnahmebereich 19 zu der nächsten Bearbeitungseinrichtung 3 als auch ein Ausschleusen bzw. Querfördern von der ersten Transportspur T1 zu einer anderen Transportspur T, hier der zweiten Transportspur T2. Insbesondere bildet die Transfereinrichtung 9 also eine Weiche, mit insbesondere vorgeordnetem Aufnahmebereich 19 zur Zwischenspeicherung.

Da die Transfereinrichtung 9 vorzugsweise auch zum bereits genannten Einschleusen von Linsen 2 bzw. Linsenträgern 5 in die erste Transportspur T1 ausgebildet ist, bildet die Transfereinrichtung 9 insbesondere eine universell einsetzbare Weiche, die ausgehend von der ersten Förderrichtung F1 ein Abzweigen zur Querförderung zur Ausschleusung als auch ein Einschleusen insbesondere über die gleiche Querförderung bei entgegengesetzter Richtung und zur Weiterförderung in der ersten Förderrichtung F1 ermöglicht. So wird ein sehr kompakter Aufbau bei universeller Einsetzbarkeit ermöglicht.

Anzumerken ist noch, dass das Transfersystem 4 bzw. die zweite Transportspur T2 vorzugsweise ein Anhalten von Linsen 2 bzw. Linsenträgern 5 vor der Querförderung der Transfereinrichtung 9, insbesondere zur Einschleusung in die zweite Transportspur T2, beispielsweise jeweils in einem vorgeordneten Stoppbereich 24, wie gestrichelt in Fig. 3 angedeutet, insbesondere mittels einer zugeordneten Stoppeinrichtung 18 o. dgl., ermöglicht, so dass ein ungestörtes Einschleusen von Linsen 2 bzw. Linsenträgern 5 in die zweite Transportspur T2 erfolgen kann.

Vorzugsweise ist dem Stoppbereich 24 ein Sensor 16 zur Erfassung bzw. Identifizierung von Linsen 2 bzw. Linsenträgern 5 im Stoppbereich 24 zugeordnet.

Vorzugsweise sind Sensoren 16 auch den Hubtischen 15C zugeordnet bzw. im Bereich der Fördereinrichtungen 15 jeweils der ersten und/oder zweiten Transportspur T1 bzw. T2 angeordnet, um dort Linsen 2 bzw. Linsenträger 5 erfassen bzw. identifizieren zu können.

Vorzugsweise ist mindestens ein Sensor 16, der einer Transfereinrichtung 9 und/oder dem Aufnahmebereich 19 und/oder dem Stoppbereich 24 zugeordnet ist, der nachgeordneten Bearbeitungseinrichtung 3 zugeordnet, so dass über diesen Sensor 16 bzw. diese Sensoren 16 ankommende Linsen 2 bzw. Linsenträger 5 erfassbar und vorzugsweise identifizierbar sind, um für die Bearbeitung in der zugeordneten Bearbeitungseinrichtung 3 geeignete Linsen 2 - insbesondere unter Rückgriff auf den oder Berücksichtigung von Bearbeitungsplan und Bearbeitungsstatus der jeweiligen Linse 2 - erkennen und bedarfsweise anfordern zu können.

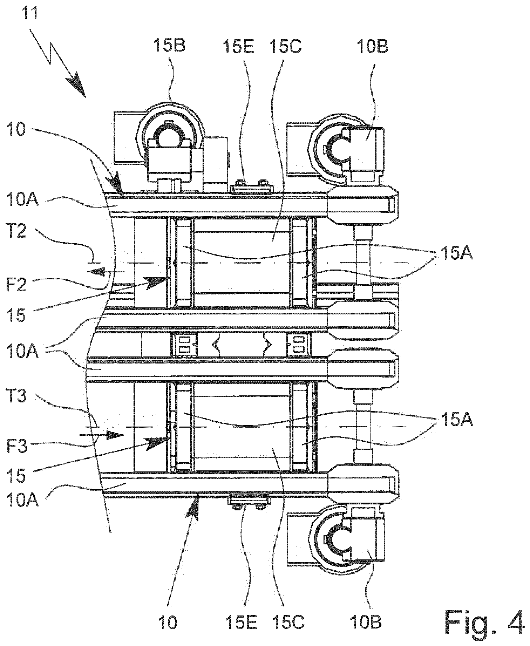

Fig. 4 zeigt in einer schematischen, vergrößerten Ansicht von Fig. 1 einen bevorzugten Aufbau einer Wechseleinrichtung 11. Die Wechseleinrichtung 11 weist vorzugsweise eine Fördereinrichtung 15 zur Querförderung ähnlich der Fördereinrichtung 15 der Transfereinrichtung 9 auf, so dass auf die diesbezüglichen Ausführungen verwiesen wird. Im Unterschied zu der Fördereinrichtung 15 der Transfereinrichtung 9 weist die Fördereinrichtung 15 der Wechselrichtung 11 vorzugsweise keinen oder einen sehr verkleinerten Zwischenförderer auf, insbesondere da die beiden Transportspuren T2 und T3 vorzugsweise sehr eng bzw. (viel) enger als die Transportspuren T1 und T2 nebeneinander liegen, der Zwischenabstand also vorzugsweise geringer ist. Bei der Wechselrichtung 11 ist daher der Antrieb 15B der Fördereinrichtung 15 vorzugsweise nicht zwischen den zugeordneten Transportspuren T2 und T3, sondern vorzugsweise seitlich, insbesondere an der Transportspur T2 zur Transportspur T1 hin angeordnet.

Aus Vereinfachungsgründen sind in Fig. 4 die Hubeinrichtungen für die Hubtische 15C nicht dargestellt. Jedoch sind die Hubelemente bzw. Hubtische 15C und damit die Bänder bzw. Gurte 15A der Fördereinrichtung 15 bei der Wechseleinrichtung 11 vorzugsweise in entsprechender Weise anhebbar und absenkbar, wie dies bei der Transfereinrichtung 9 der Fall ist, so dass auf die diesbezügliche Beschreibung verwiesen wird.

Die Förderrichtung der Querförderung durch die Fördereinrichtung 15 kann bei der Wechseleinrichtung 11 ebenso wie bei der Transfereinrichtung 9 vorzugsweise geändert werden, der Antrieb 15B also in unterschiedlichen Richtungen arbeiten, um Linsenträger 5 wahlweise bzw. bedarfsweise von der zweiten Transportspur T2 zu der dritten Transportspur T3 oder umgekehrt wechseln bzw. fördern zu können.

Wie bereits erwähnt, können eine Wechseleinrichtung 11 und eine Transfereinrichtung 9 bzw. deren Fördereinrichtungen 15 zur Querförderung auch miteinander kombiniert werden bzw. eine Baueinheit bilden bzw. in Verlängerung zueinander angeordnet sein. In diesem Fall kann ein Hubtisch 15C entfallen. Weiter kann die Transfereinrichtung 9 dann einen Wechsel über die zweite bzw. mittlere Transportspur T2 hinweg in die dritte Transportspur T3 gestatten bzw. eine Wechseleinrichtung bilden.

Beim Darstellungsbeispiel ist der Abstand der ersten und zweiten Transportspur T1 und T2 vorzugsweise größer als der Abstand der zweiten und dritten Transportspur T2 und T3. Hierdurch kann dem Platzbedarf der Bearbeitungseinrichtungen 3 für die Aufnahme und Ablage von Linsen 2 auf der jeweiligen Fördereinrichtung 8 bzw. einem darauf angeordneten Linsenträger 5 Rechnung getragen werden. Insbesondere überbauen oder umschließen die Bearbeitungseinrichtungen 3 nämlich die jeweils zugeordnete Fördereinrichtung 8 zumindest teilweise, wie in den Darstellungsbeispielen gemäß Fig. 1 und Fig. 5 schematisch angedeutet.

Vorzugsweise können unter den Transportspuren T bzw. Fördereinrichtungen 10 und/oder Transfereinrichtungen 9 auch Vorratseinrichtungen oder Tanks oder dgl. für die Bearbeitungseinrichtungen 3 angeordnet werden.

Nachfolgend werden anhand der weiteren Figuren weitere Ausführungsbeispiele der vorschlagsgemäßen Anlage 1 erläutert. Hierbei wird jeweils insbesondere auf wesentliche Unterschiede und neue Aspekte näher eingegangen, so dass die bisherigen Ausführungen und Erläuterungen insbesondere entsprechend oder ergänzend gelten, auch wenn eine diesbezügliche Wiederholung weggelassen ist.

Fig. 5 zeigt in einer schematischen Darstellung ein anderes Ausführungsbeispiel der vorschlaggemäßen Anlage 1. Fig. 5 veranschaulicht, dass die vorschlagsgemäße Anlage 1 sehr leicht durch Integration oder Einbinden weiterer Bearbeitungseinrichtungen 3 ausgebaut - also erweitert - werden kann. Beispielsweise wurden hier an eine Bearbeitungs- oder Fertigungslinie endend mit der Ausgabestation 6 nachträglich (in Fig. 5 links davon) weitere Bearbeitungseinrichtungen 3, hier beispielhaft eine weitere Bearbeitungseinrichtung 3D zum Polieren und eine zusätzliche Bearbeitungseinrichtung 3G zum Beschichten, eingebunden. Das Transfersystem 4 wurde entsprechend verlängert bzw. ergänzt. Die Abgabestation 6 kann bedarfsweise dann auch umgebaut und beispielsweise am Ende angeordnet werden, wie gestrichelt durch Position 6' angedeutet.

Die vorschlagsgemäße Anlage 1 gestattet eine optimierte Bearbeitung und Ausnutzung der oft unterschiedlichen Bearbeitungskapazitäten der verschiedenen Bearbeitungseinrichtungen 3. Beispielsweise können Linsen 2 bzw. Linsenträger 5 mit Linsen 2 wahlweise an die ursprüngliche Bearbeitungseinrichtung 3D auf der rechten Seite oder an die weitere Bearbeitungseinrichtung 3D auf der linken Seite gefördert werden, wobei eine Hinförderung über die zweite Transportspur T2 und bei Bedarf eine Rückförderung insbesondere über die dritte Transportspur T3, beispielsweise zur anschließenden Bearbeitung in der rechten Bearbeitungseinrichtung 3F erfolgen kann.

Gemäß einem besonders bevorzugten Aspekt der vorliegenden Erfindung kann eine Zirkulation bzw. Kreisförderung K der Linsen 2 bzw. Linsenträger 5 über die zweite Transportspur T2 in eine Richtung und die dritte Transportspur T3 in die entgegengesetzte Richtung erfolgen. Insbesondere wird eine Zirkulation oder Kreisförderung K der Linsen 2 bzw. Linsenträger 5 durch entsprechende Querverbindungen oder Querförderungen zwischen den beiden Transportspuren T2 und T3 ermöglicht oder gebildet. Dies kann insbesondere eine Speicherung von Linsen 2 bzw. Linsenträgern 5 ermöglichen und/oder die Bildung von unerwünschten Stauungen verhindern oder minimieren. Insbesondere werden die Linsen 2 bzw. Linsenträger 5 nach Bedarf und/oder Verfügbarkeit an gewünschte Bearbeitungseinrichtungen 3 ausgeschleust bzw. gefördert. Dies erfolgt insbesondere durch entsprechende Querförderung und/oder einen Wechsel zur ersten Transportspur T1 bzw. zu einer der gewünschten Bearbeitungseinrichtung 3 zugeordneten oder vorgeordneten Transfereinrichtung 9.

Eine entsprechende Zirkulation oder Kreisförderung K von Linsen 2 bzw. Linsenträgern 5 ist bei der vorschlagsgemäßen Anlage 1 gemäß dem in Fig. 6 gezeigten, weiteren Ausführungsbeispiel bzw. gemäß dem vorschlagsgemäßen Verfahren vorzugsweise ebenfalls möglich oder vorgesehen.

In Fig. 6 ist schematisch angedeutet, dass bei der Zirkulation bzw. Kreisförderung K mehrere Linsenträger 5 zirkulieren bzw. in einem Kreislauf gefördert werden, beispielsweise so lange bis die nächste oder eine gewünschte Bearbeitungseinrichtung 3 zur Aufnahme bzw. Zuföderung für die passende Bearbeitung bereits ist.

Bei dem in Fig. 6 gezeigten Ausführungsbeispiel wurde eine ursprünglich, zumindest im Wesentlichen geradlinig aufgebaute Anlage 1 ergänzt oder erweitert, wobei der Erweiterungsabschnitt vorzugsweise abgewinkelt verläuft. Die Anlage 1 und die Transportspuren T weisen hier insbesondere also eine L-Form auf. Wie bereits erwähnt, sind jedoch auch andere insbesondere polygonale Anordnungen oder eben eine zumindest im Wesentlichen nur geradlinige Anordnung oder sonstige Anordnungen, insbesondere je nach baulichen Gegebenheiten, möglich. Beim Darstellungsbeispiel wurde die ursprüngliche Anlage 1 mit den ursprünglichen Bearbeitungseinrichtungen 3A, 3B, 3C, 3D, 3F und 3G (in Fig. 6 oben) beispielsweise um zusätzliche Bearbeitungseinrichtungen 3C, 3D und 3E (in Fig. 6 auf der linken Seite) ergänzt oder erweitert.

Die Erweiterung des Transfersystems 4 erfolgt beim Darstellungsbeispiel vorzugsweise über Verbindungseinrichtungen 22, insbesondere entsprechende Verlängerungen, Umlenkungen, Eckverbinder und/oder dgl., besonders bevorzugt um weitere Fördereinrichtungen 10 und/oder Transfereinrichtungen 9 o. dgl. anzuschließen, und/oder um die erste, zweite und/oder dritte Transportspur T zu verlängern. Besonders bevorzugt werden die Transportspuren T2 und T3 bzw. die mögliche oder bevorzugte Kreisförderung K entsprechend verlängert. Beim Darstellungsbeispiel endeten ursprünglich die Kreisförderung K und die Transportspuren T im Bereich der Abgabestation 6. Erst die Erweiterung hat hier zu dem beispielhaft dargestellten L-förmigen Aufbau geführt.

Die erforderlichen zusätzlichen Transfereinrichtungen 9 bzw. Fördereinrichtungen 10 und/oder Wechseleinrichtungen 11 bei der Ergänzung des Transfersystems 4 werden vorzugsweise direkt an das Bussystem 13 angeschlossen. Dementsprechend kann der Aufwand für den Ausbau minimiert werden, also eine Erweiterung sehr einfach erfolgen.

Wie bereits erwähnt, erfolgt vorzugsweise eine unabhängige Steuerung des Transfersystems 4 einerseits und der Fördereinrichtungen 8 der Bearbeitungseinrichtungen 3 andererseits. Vorzugsweise ist vorgesehen, dass die Transfereinrichtungen 9, Fördereinrichtungen 10 und/oder Wechseleinrichtungen 11 von der vorzugsweisen zentralen Transfersteuereinrichtung 12, insbesondere einer speicherprogrammierbaren Steuerung, und/oder über das Bussystem 13 gesteuert werden und dass die Fördereinrichtungen 8 der Bearbeitungseinrichtungen 3 von der jeweiligen Bearbeitungseinrichtung 3 oder deren Maschinensteuerung 20 gesteuert werden. Insbesondere wird das Transfersystem 4 insgesamt von der Steuereinrichtung 12 gesteuert. Dies gestattet einen optimalen Ablauf und/oder eine sehr robuste, wenig störanfällige Steuerung. Des Weiteren erleichtert dies eine Erweiterung der Anlage 1.

Beim Darstellungsbeispiel sind einzelne, mehrere oder alle Bearbeitungseinrichtungen 3 oder deren Maschinensteuerungen 20 vorzugsweise an die zentrale Anlagen- bzw. Systemsteuerung 21 angeschlossen, beispielsweise über ein Datennetzwerk, ein (weiteres) Bussystem 25, eine Ethernet-Verkabelung o. dgl. Bei der Systemsteuerung 21 kann es sich um einen Server, um ein Datenbanksystem oder dgl. handeln. Die Systemsteuerung 21 verwaltet insbesondere die von der Anlage 1 abzuarbeitenden Aufträge bzw. die von der Anlage 1 zu bearbeitenden Linsen 2 bzw. die für die Bearbeitung erforderlichen Informationen, beispielsweise Bearbeitungsdaten, Bearbeitungspläne bzw. Bearbeitungsreihenfolgen, Bearbeitungsstati, geplante oder erforderliche Bearbeitungsschritte, optische und/oder geometrische Informationen oder Daten der Linsen 2 und/oder sonstige Informationen, beispielsweise über einzusetzende oder verfügbare Werkzeuge o. dgl.

Vorzugsweise sind die Transfersteuerung bzw. Steuereinrichtung 12 einerseits und die Systemsteuerung 21 andererseits zum Informations- bzw. Datenaustausch miteinander gekoppelt, wie in Fig. 6 schematisch angedeutet.

Vorzugsweise kann die Systemsteuerung 21 das Transfersystem 4 bzw. die Transfereinrichtungen 9, Fördereinrichtungen 10 und/oder Wechseleinrichtungen 11 insbesondere über die Steuereinrichtung 12 derart steuern, dass gewünschte Linsen 2 bzw. Linsenträger 5 zu den jeweiligen Bearbeitungseinrichtungen 3, bedarfsweise nur auf entsprechende Anforderung der jeweiligen Bearbeitungseinrichtung 3 hin, gefördert werden.

Insbesondere können verschiedene oder alle Bearbeitungsmaschinen 3 individuell Arbeitsaufträge bzw. zu bearbeitende Linsen 2 oder Linsenträger 5 mit zu bearbeitenden Linsen 2 selbsttätig vom Transfersystem 4 anfordern oder sich holen, die jeweilige erforderliche Bearbeitung durchführen und die Linse 2 nach der Bearbeitung wieder zurück auf das Transfersystem 4 schleusen bzw. an dieses übergeben. Das Holen bzw. Anfordern von Linsen 2 zur Bearbeitung durch eine, mehrere oder ggf. alle Bearbeitungseinrichtungen 3 erfolgt also selbsttätig bzw. unabhängig. Insbesondere kann eine Bearbeitungseinrichtung 3 selbsttätig insbesondere unter Berücksichtigung eines Bearbeitungsplans und Bearbeitungsstatus (diese Bearbeitungsdaten oder Informationen werden insbesondere von der Systemsteuerung 21 oder einer Datenbank, einem Datenspeicher o. dgl. abgefragt oder bereitgestellt) feststellen, ob eine (insbesondere sich in der Nähe oder kurz vor der Bearbeitungseinrichtung 3 befindende) Linse 2 zur Bearbeitung in der jeweiligen Bearbeitungseinrichtung 3 geeignet ist, um bei entsprechender Kapazität der Bearbeitungseinrichtung 3 diese bzw. den entsprechenden Linsenträger 5 anzufordern bzw. sich zufördern zu lassen.

Insbesondere können also mehrere Bearbeitungseinrichtungen 3 für die gleiche Bearbeitung unabhängig voneinander eine Linse 2 für die nächste Bearbeitung auswählen und/oder anfordern. Beim Darstellungsbeispiel erfolgt das Anfordern durch eine Bearbeitungseinrichtung 3 insbesondere dann, wenn diese freigefahren worden ist. Bei Bedarf kann das Anfordern jedoch auch schon vorher zur Minimierung von Wartezeiten erfolgen. Dann kann in der Zwischenzeit die nächste zu bearbeitende Linse 2 bzw. der entsprechende Linsenträger 5 insbesondere bereits der der Bearbeitungseinrichtung 3 vorgeordneten Transfereinrichtung 4 zugefördert bzw. von dieser aufgenommen werden und dort warten, bis die Bearbeitungseinrichtung 3 zur Aufnahme der nächsten Linse 2 bzw. des nächsten Linsenträgers 5 bereit ist.

Vorzugsweise gibt die jeweilige Bearbeitungseinrichtung 3 eine entsprechende Information oder ein entsprechendes Signal an die Steuereinrichtung 12 aus, wenn eine Linse 2 oder ein Linsenträger 5 nach der Bearbeitung an die nachgeordnete Transfereinrichtung 9 bzw. an das Transfersystem 4 abgegeben werden soll oder bereits abgegeben wurde. Je nach Kapazität wird dann die jeweilige Linse 2 bzw. der jeweilige Linsenträger 5 von dem Transfersystem 4 bzw. der der jeweiligen Bearbeitungseinrichtung 3 nachgeordneten Transfereinrichtung 9 aufgenommen, beispielsweise in den Aufnahmebereich 19, und/oder weitergefördert, beispielsweise zu einer nachgeordneten Bearbeitungseinrichtung 3 und/oder in die zweite Transportspur T2 oder die Kreisförderung K wieder eingeschleust. Dies kann wahlweise durch das Transfersystem 4 bzw. deren Steuereinrichtung 12 selbstständig und/oder in Abstimmung und/oder in Abhängigkeit von der Systemsteuerung 21 erfolgen.

Des Weiteren wird der zur Aufnahme einer Linse 2 bzw. eines Linsenträgers 5 bereiten Bearbeitungseinrichtung 3 dann wieder eine Linse 2 bzw. ein Linsenträger 5 zugefördert, wobei die Auswahl - wie bereits erwähnt - besonders bevorzugt durch die jeweilige Bearbeitungseinrichtung 3 bzw. deren Maschinensteuerung 20 und/oder durch die Systemsteuerung 21, besonders bevorzugt unter Berücksichtigung von für die Bearbeitung relevanten Daten, wie Bearbeitungsplan und Bearbeitungszustand, insbesondere aus der Systemsteuerung 21, erfolgt. Die Steuerung der Zuförderung erfolgt dann vorzugsweise über die Steuereinrichtung 12, kann bedarfsweise aber auch von der jeweiligen Bearbeitungseinrichtung 3 bzw. deren Maschinensteuerung 20 gesteuert werden, wie später noch anhand eines anderen Ausführungsbeispiels gemäß Fig. 7 näher erläutert.

Alternativ oder zusätzlich kann die jeweilige Bearbeitungseinrichtung 3 bei der Zu- und Abförderung von Linsen 2 bzw. Linsenträgern 5 bzw. bei der Ansteuerung der vorgeordneten und/oder nachgeordneten Transfereinrichtung 9 oder Fördereinrichtung 14 Vorrang beispielsweise vor einer nachgeordneten oder vorgeordneten Bearbeitungseinrichtung 3 und/oder vor der Transfersteuerung bzw. Steuereinrichtung 12 haben.

Besonders bevorzugt übergibt eine Bearbeitungseinrichtung 3 bzw. deren Fördereinrichtung 8 nach der Bearbeitung eine Linse 2 bzw. einen Linsenträger 5 an das Transfersystem 4 bzw. an eine - vorzugsweise in Förderrichtung F1 nachgeordnete - Transfereinrichtung 9, sofern oder sobald dort Platz zur Aufnahme ist, insbesondere wenn der jeweilige bzw. zugeordnete Aufnahmebereich 19 frei ist. Hierzu kommuniziert die Bearbeitungseinrichtung 3 bzw. deren Maschinensteuerung 20 vorzugsweise über die Systemsteuerung 21 oder direkt mit der Transfersteuerung bzw. Steuereinrichtung 12 bzw. dem Transfersystem 4 oder der jeweiligen Transfereinrichtung 9.

Nach dem Freifahren der Bearbeitungseinrichtung 3 bzw. deren Fördereinrichtung 8 kann diese wieder die nächste Linse 2 bzw. den nächsten Linsenträger 5 aufnehmen. Die Zuförderung erfolgt insbesondere über das Transfersystem 4 bzw. die vorgeordnete Transfereinrichtung 9. Die Auslösung der Zuförderung erfolgt vorzugsweise durch eine Anforderung der jeweiligen Bearbeitungseinrichtung 3 oder durch die Systemsteuerung 21, wenn diese erkannt bzw. mitgeteilt bekommen hat, dass die Bearbeitungseinrichtung 3 bzw. deren Fördereinrichtung 8 freigefahren worden ist.

Es ist anzumerken, dass die Fördereinrichtungen 8 der Bearbeitungseinrichtungen 3 insbesondere auch mehrere Linsen 2 bzw. Linsenträger 5 mit Linsen 2 bedarfsweise (gleichzeitig) aufnehmen können. Der Begriff "Freifahren" ist dann dementsprechend dahingehend zu verstehen, dass die jeweilige Bearbeitungseinrichtung 3 bzw. deren Fördereinrichtung 8 zur Aufnahme einer Linse 2 bzw. eines Linsenträgers 5 bereit ist, selbst wenn sich noch eine oder mehrere Linsen 2 bzw. Linsenträger 5 in der Bearbeitungseinrichtung 3 bzw. deren Fördereinrichtung 8 befinden.

Wie bereits erwähnt, kann die Zuförderung beim Darstellungsbeispiel insbesondere wahlweise von dem Aufnahmebereich 19 einer vorgeordneten Transfereinrichtung 9 oder durch Querförderung über die Fördereinrichtung 15 und anschließende Längsförderung über die Fördereinrichtung 14 der vorgeordneten Transfereinrichtung 9, also durch Zuförderung von der zweiten Transportspur T2, erfolgen. Vorzugsweise steuert die Steuereinrichtung 12 und/oder die Anforderung der jeweiligen Bearbeitungseinrichtung 3 und/oder eine Priorisierung von Bearbeitungen bzw. Linsen 2 durch die Systemsteuerung 21 den Ablauf.

Die bereits zuvor von der Bearbeitungseinrichtung 3 bearbeitende Linse 2 bzw. der diese tragende Linsenträger 5 kann von der nachgeordneten Transfereinrichtung 9 aufgenommen und bei Bedarf im Aufnahmebereich 19 zwischengespeichert werden. Jedoch kann ggf. auch direkt eine Weiterförderung ohne Anhalten erfolgen.

Die Weiterförderung kann darin bestehen, dass die Linse 2 bzw. der Linsenträger 5 an die nächste Bearbeitungseinrichtung 3, also in die Förderrichtung F1 weiter entlang der ersten Transportspur T1 weitergefördert wird, also der nächsten Bearbeitungseinrichtung 3 bzw. deren Fördereinrichtung 8 zugefördert wird. Alternativ kann auch eine Querförderung mittels der Fördereinrichtung 15 und ein Wechsel in die zweite Transportspur T2 und ggf. weiter in die dritte Transportspur T3 erfolgen. So kann dann eine Weiterförderung zu einer anderen Bearbeitungseinrichtung 3 oder ggf. zur Abgabestation 6 erfolgen.

Vorzugsweise erfolgt eine Weiterförderung über die zweite und/oder dritte Transportspur T2, T3, wenn eine Zuförderung zu einer anderen Bearbeitungseinrichtung 3 gewünscht oder erforderlich ist, beispielsweise aufgrund eines Ausfalls einer Bearbeitungseinrichtung 3 oder unterschiedlicher Ausrüstungen oder unterschiedlicher Werkzeuge der Bearbeitungseinrichtungen 3, oder beispielsweise aufgrund einer gewünschten oder erforderlichen Bearbeitungsreihenfolge bzw. eines gewünschten oder erforderlichen Bearbeitungsablaufs.

Fig. 7 zeigt in einer schematischen Darstellung noch ein anderes Ausführungsbeispiel der vorschlagsgemäßen Anlage 1. Vorzugsweise weisen einzelne, mehrere oder alle Transfereinrichtungen 9 neben der jeweiligen Fördereinrichtung 15 zur Querförderung jeweils zusätzlich eine Fördereinrichtung 15' zur Querförderung auf. Beide Fördereinrichtungen 15 und 15' einer Transfereinrichtung 9 sind vorzugsweise unabhängig voneinander betreibbar. Dies ermöglicht, dass die jeweilige Bearbeitungseinrichtung 3 die vorgeordnete Querförderung über die vorgeordnete Fördereinrichtung 15 und die nachgeordnete Querförderung über die nachgeordnete Fördereinrichtung 15' jeweils direkt bzw. selbstständig steuert, insbesondere unabhängig von der in Fig. 7 nicht dargestellten Transfersteuerung bzw. Steuereinrichtung 12. So wird ein selbstständiges Ausschleusen von Linsen 2 bzw. Linsenträgern 5 aus der Zirkulation bzw. Kreisförderung K und/oder ein selbstständiges Zurückfördern oder Wiedereinschleusen von Linsen 2 bzw. Linsenträgern 5 in die Zirkulation bzw. Kreisförderung K durch die jeweilige Bearbeitungseinrichtung 3 bzw. deren Maschinensteuerung 20 ermöglicht. Für die Bearbeitungseinrichtungen 3C und 3D ist daher beispielshaft in Fig. 7 angedeutet, dass die jeweilige Maschinensteuerung 20 an die zugeordnete Fördereinrichtung 15 und 15' angeschlossen ist.

Die zugeordnete bzw. dazwischen angeordnete Fördereinrichtung 14 ist optional vorgesehen, kann also auch entfallen, und wird vorzugsweise von der vor- oder nachgeordneten Bearbeitungseinrichtung 3 bzw. deren Maschinensteuerung 20 gesteuert.

Alternativ oder zusätzlich wird besonders bevorzugt eine Erfassung von Linsen 2 bzw. Linsenträgern 5 über insbesondere ebenfalls an die Maschinensteuerung 20 angeschlossene Sensoren 16 ermöglicht. Mittels der Sensoren 16 ist es beispielsweise möglich, in der Transportspur T2 bzw. Zirkulation oder Kreisförderung K befindliche Linsen 2 bzw. Linsenträger 5 zu identifizieren und für die Bearbeitung in der jeweiligen Bearbeitungseinrichtung 3 geeignete Linsen 2 bzw. Linsenträger 5 auszuschleusen bzw. in die erste Transportspur T2 wechseln zu lassen, insbesondere unabhängig von anderen Bearbeitungseinrichtungen 3 bzw. deren Maschinensteuerung 20 und/oder unabhängig von der Transfersteuerung bzw. Steuereinrichtung 12 und/oder unabhängig von der Systemsteuerung 21.

Die Maschinensteuerung 20 sind vorzugsweise der jeweiligen Bearbeitungseinrichtung 3 zugeordnet oder in dieser angeordnet, können aber auch davon getrennt oder zentral angeordnet sind.

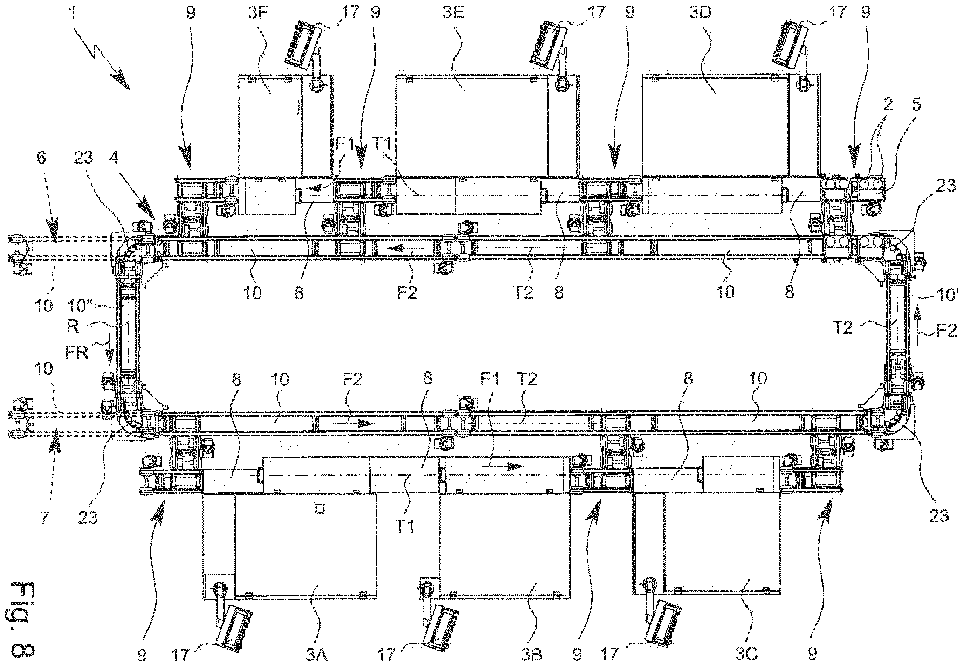

Fig. 8 zeigt in einer schematischen Darstellung ein weiteres Ausführungsbeispiels der vorschlagsgemäßen Anlage 1. Bei diesem Ausführungsbeispiel wird vorzugsweise eine zumindest im Wesentlichen U-förmige Anordnung, insbesondere der ersten oder zweiten Transportspur T1 bzw. T2 gebildet.

Vorzugsweise sind zwei Gruppen oder Reihen von Bearbeitungseinrichtungen 3, hier beispielsweise eine erste Gruppe von Bearbeitungseinrichtungen 3A, 3B und 3C und eine zweite Gruppe von Bearbeitungseinrichtungen 3D, 3E und 3F, einander gegenüberliegend und/oder mit auf einander zugewandten Seiten angeordneten Fördereinrichtungen 8 gebildet oder angeordnet und/oder derart angeordnet, dass die zugeordneten Transportspuren T1 und/oder T2 der beiden Gruppen vorzugsweise parallel zueinander verlaufen.

Vorzugsweise weist die Anlage 1 bzw. das Transfersystem 4 eine Querverbindung der beiden Gruppen von Bearbeitungseinrichtungen 3 über eine Fördereinrichtung 10' und/oder 10" quer bzw. miteinander verbunden.

Vorzugsweise bildet die Fördereinrichtung 10' einen Schenkel oder Abschnitt der vorzugsweise zumindest im Wesentlichen U-förmigen Anordnung oder einen Teil des vorzugsweise im Wesentlichen U-förmigen Verlaufs der ersten oder zweiten Transportspur T1 bzw. T2, hier der zweiten Transportspur T2. Bedarfsweise können an diesem Abschnitt auch ein oder mehrere Bearbeitungseinrichtungen 3 angeordnet sein.

Vorzugsweise weist die Anlage 1 bzw. das Transfersystem 4 eine Rückförderverbindung R auf.

Vorzugsweise weist die Rückförderverbindung R die (zweite) Fördereinrichtung 10" auf bzw. wird dadurch gebildet.

Vorzugsweise ist bei dem dargestellten Ausführungsbeispiel eine Kreisförderung bzw. Zirkulation, besonders bevorzugt über die erste oder zweite Transportspur T1 bzw. T2 möglich. Beim Ausführungsbeispiel ist hierzu die Rückförderverbindung R für die erste oder zweite Transportspur T1 bzw. T2 (beim Darstellungsbeispiel nur für die zweite Transportspur T2) vorgesehen. Hier ermöglicht die Rückförderverbindung R eine Rückförderung in die Rückförderrichtung FR, so dass eine Kreisförderung bzw. Zirkulation der Linsen 2 bzw. Linsenträger 5 über die zweite Transportspur T2 ohne Umkehr der Förderrichtung F2 und ohne Wechsel in die entgegengesetzte Förderrichtung F3 ermöglicht wird.

Beim dargestellten Ausführungsbeispiel weist die Anlage 1 bzw. das Transfersystem 4 vorzugsweise eine Aufnahmestation 7 und/oder Abgabestation 6 bzw. entsprechende Fördereinrichtungen 10 (in Fig. 8 gestrichelt auf der linken Seite angedeutet) als Einlauf- und/oder Auslaufstrecke für Linsen 2 bzw. Linsenträger 5 auf.

Die Rückförderverbindung R bzw. Fördereinrichtung 10" ist besonders bevorzugt im Bereich des Anfangs und/oder Endes der Transportspur T1 bzw. T2 und/oder der üblichen Bearbeitung und/oder im Bereich der Aufnahmestation 7 bzw. Abgabestation 6 angeordnet. Besonders bevorzugt ist die Rückförderverbindung R bzw. Fördereinrichtung 10" über entsprechende Weichen angeschlossen. Jedoch sind auch andere konstruktive Lösungen und/oder Anordnungen möglich, insbesondere je nach Lage und Ausbildung bzw. Anordnung der Aufnahmestation 7 und/oder Abgabestation 6.

Bei dem Ausführungsbeispiel gemäß Fig. 8 gestattet die Rückförderverbindung R eine Kreisförderung bzw. Zirkulation der Linsen 2 bzw. Linsenträger 5. Dementsprechend ist eine dritte Transportspur T3 zur Rückförderung bzw. Zirkulation nicht erforderlich. Jedoch können die Rückförderverbindung R und die dritte Transportspur T3 bedarfsweise auch kombiniert oder ergänzend eingesetzt werden, insbesondere je nach baulichen Gegebenheiten und/oder vorhandenen Bearbeitungseinrichtungen 3.

Die Rückförderverbindung R kann bei Bedarf auch an einer anderen Stelle angeordnet sein bzw. nur einen Kreislauf für einige der Bearbeitungseinrichtungen 3 bilden, beispielsweise einerseits zwischen der Bearbeitungseinrichtung 3B und 3C und andererseits zwischen der Bearbeitungseinrichtung 3D und 3E angeschlossen sein, je nach Bedarf also auch einen kürzeren oder kleineren Kreislauf bilden oder ermöglichen.

Bedarfsweise können auch mehrere derartige Querverbindungen bzw. Rückförderverbindungen R vorgesehen sein oder werden. Hierdurch können bedarfsweise auch zusätzliche Speicherstrecken gebildet werden.

Vorzugsweise weist die Anlage 1 bzw. das Transfersystem 4 Fördereinrichtungen 23 zur Kurvenförderung auf, insbesondere um gerade Abschnitte der jeweiligen Transportspur, hier T2, und/oder verschiedene Fördereinrichtungen 10, 10' und/oder 10" und/oder die Rückförderverbindung R mit der Transportspur T2 zu verbinden. Durch die Kurvenförderung kann erreicht werden, dass die Ausrichtung der Linsen 2 bzw. Linsenträger 5 bezüglich der jeweiligen Förderrichtung F gleichbleibt also beispielsweise bei einem Linsenträger 5 mit zwei Linsen 2 immer die selbe Linse 2 vorne ist.

Die beiden Gruppen von Bearbeitungseinrichtungen 3 bzw. die beiden Schenkel der besonders bevorzugt U-förmigen Anordnung sind beim Darstellungsbeispiel vorzugsweise relativ nah beieinander angeordnet und/oder derart beabstandet, dass der Zwischenraum eine Zugangsmöglichkeit für einen nicht dargestellten Bediener bildet. Insbesondere sind hierzu die Querverbindungen bzw. Fördereinrichtungen 10' und/oder 10" derart ausgebildet, dass diese bei Bedarf gelöst oder geöffnet oder weggeklappt werden können. Alternativ oder zusätzlich können diese auch höher oder tiefergelegt und beispielsweise über entsprechende Vertikalförderer oder Gefällestrecken angeschlossen sein, so dass ein vorzugsweise freier Zugang zu dem Zwischenraum ermöglicht wird.

Alternativ oder zusätzlich kann der Zwischenraum auch für Betriebsmittelbehälter für Bearbeitungseinrichtungen 3 genutzt werden, beispielsweise für einen Kühlmittelbehälter, einen Behälter für Späne, einen Behälter für Kühlflüssigkeit oder dergleichen. Die Behälter können insbesondere im Zwischenraum und/oder unterhalb des Transfersystems, besonders bevorzugt unterhalb der zweiten Transportspur T2 angeordnet sein.

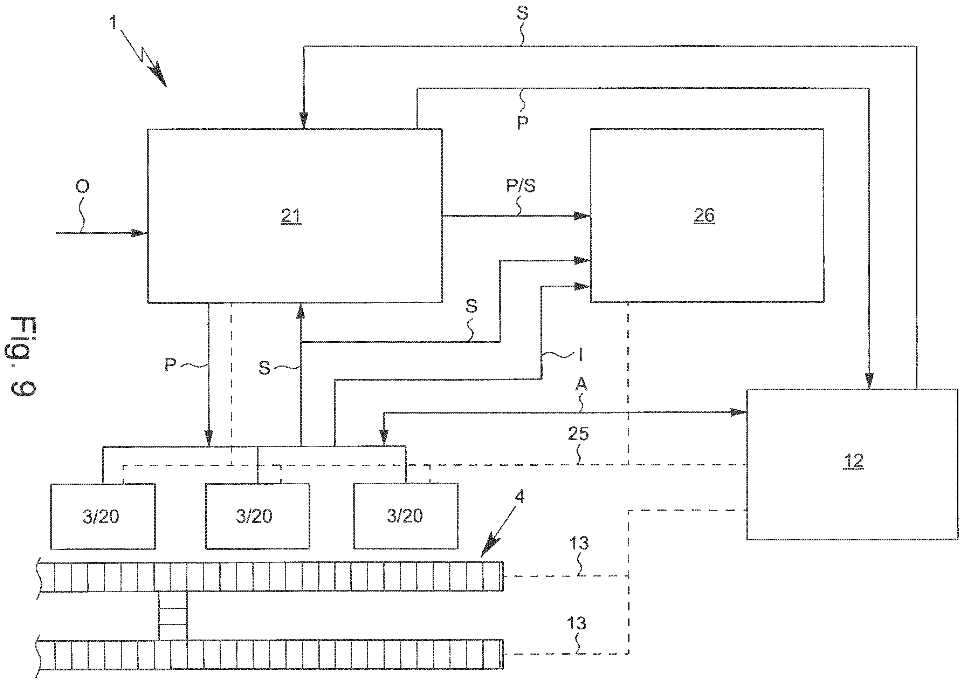

Fig. 9 zeigt in einer sehr schematischen Darstellung ein Blockschaltbild eines bevorzugten Steuerungsaufbaus einer vorschlagsgemäßen Anlage 1.

Wie bereits erwähnt, weist die Anlage 1 bzw. das Transfersystem 4 vorzugsweise eine insbesondere zentrale Transfer- bzw. Steuereinrichtung 12 auf. Hierbei handelt es sich insbesondere um einen sogenannten Band-Leitrechner. Bedarfsweise kann es sich auch um ein Programm und/oder mehrere vernetzte Computer, Rechner, Steuerungen o. dgl. handeln.

Die Transfer- bzw. Steuereinrichtung 12 dient insbesondere der Steuerung des Produktionsflusses bzw. der Förderung der Linsen 2 bzw. Linsenträger 5, wie der Zirkulation bzw. Kreisförderung und/oder Förderung von Linsen 2 bzw. Linsenträgern 5 zu Bearbeitungseinrichtungen 3 und von diesen weg.

Besonders bevorzugt steuert die Steuereinrichtung 12 die Transfereinrichtungen 9, Fördereinrichtungen 10 und/oder Wechseleinrichtungen 11, Fördereinrichtungen 14 zur Längsförderung, Fördereinrichtungen 15 zur Querförderung und/oder Stoppeinrichtungen 18, wobei die Transfereinrichtungen 9 vorzugsweise ergänzend oder alternativ auch von den Bearbeitungseinrichtungen 3 bzw. deren Maschinensteuerung 20 - insbesondere bei Anschluss an das Bussystem 13 - (direkt) gesteuert werden können.

Die Anlagen- bzw. Systemsteuerung 21 ist vorzugsweise über ein (weiteres) Bussystem 25 mit den Bearbeitungseinrichtungen 3 bzw. deren Maschinensteuerungen 20 gekoppelt oder verbunden. Jedoch sind hier auch andere Arten der Verbindung möglich.

Die Steuereinrichtung 12 kann mit der Systemsteuerung 21 ebenfalls über das Bussystem 25 oder eine separate Verbindung zum Datenaustausch verbunden sein.

Die Systemsteuerung 21 bildet vorzugsweise ein Linsenmanagementsystem.

Die Systemsteuerung 21 dient insbesondere der Annahme oder Erfassung von Aufträgen O und/oder der Verwaltung von Aufträgen, Produktionsdaten und/oder Linsenrohlingen und/oder der Bereitstellung von Schnittstellen zu anderen Systemen, beispielsweise zu Systemen oder Modulen für das Linsendesign, die insbesondere in Abhängigkeit von gewünschten optischen Eigenschaften die gewünschte geometrische Gestalt von Linsen 2 und/oder die erforderlichen Bearbeitungen bzw. Bearbeitungsschritte bestimmen.

Insbesondere werden in der Systemsteuerung 21 (oder einem sonstigen Server oder Datenspeicher) Produktionsdaten P, die insbesondere Bearbeitungspläne (Bearbeitungsschritte und/oder -reihenfolgen oder -abfolgen) und Bearbeitungsstati (Bearbeitungszustände bzw. Informationen über als nächstes auszuführende Bearbeitungen), bereithalten, verwalten und/oder erzeugen.

Die Produktionsdaten P werden insbesondere von der Systemsteuerung 21 den Bearbeitungseinrichtungen 3 bzw. deren Maschinensteuerungen 20 zur Verfügung gestellt und/oder können von diesen abgefragt werden, wie durch einen entsprechenden Pfeil in Fig. 9 schematisch angedeutet.

Der Status der Bearbeitungseinrichtungen 3, insbesondere der Bearbeitungsstatus bzw. Produktionsstatus, die Verfügbarkeit der jeweiligen Bearbeitungseinrichtung 3, die Werkzeugausstattung, die möglichen Bearbeitungen und/oder sonstige ähnliche Informationen, werden als Statusinformationen S von den Bearbeitungseinrichtungen 3 bzw. deren Maschinensteuerung 20 insbesondere an die Systemsteuerung 21, wie durch einen entsprechenden Pfeil in Fig. 9 angedeutet, und oder an ein System 26 zur Anzeige und/oder Verwaltung übermittelt.

Das System 26 dient insbesondere der Visalisierung und/oder Verwaltung von Maschinenzuständen, also Zuständen der Bearbeitungseinrichtungen 3, Produktionsdaten, Prozessdaten und/oder sonstiger Informationen.

Weiter dient das System 26 vorzugsweise der Verwaltung von Makros und/oder dem Berichtswesen.

Bei dem System 26 kann es sich um entsprechende Programme, Anwendungen o. dgl. und/oder um einen oder mehrere Rechner, wie einen Server o. dgl., handeln. Entsprechendes gilt auch für die Systemsteuerung 21 und/oder Steuereinrichtung 12.

Die Bearbeitungseinrichtungen 3 bzw. deren Maschinensteuerungen 20 können vorzugsweise des Weiteren Informationen I, wie Prozessdaten u. dgl., dem System 26 mitteilen, wie durch einen entsprechenden Pfeil in Fig. 9 angedeutet.

Zum Informations- bzw. Datenaustausch kann das System 26 auch an das Bussystem 25 angeschlossen sein. Alternativ oder zusätzlich kann der Datenaustausch auch über die Systemsteuerung 21 erfolgen.

Vorzugsweise können die Systemsteuerung 21 und das System 26 Produktionsdaten P und/oder Daten Statusinformationen S, beispielsweise zum Auftragsstatus, wie durch Pfeil P/S in Fig. 9 angedeutet, austauschen.

Vorzugsweise können die Systemsteuerung 21 und die Steuereinrichtung 12 Produktionsdaten P, wie durch einen entsprechenden Pfeil in Fig. 9 angedeutet, und/oder Statusinformationen S, insbesondere Daten zum Auftragsstatus, wie durch einen entsprechenden Pfeil A in Fig. 9 angedeutet, austauschen und/oder abgleichen.

Zum Datenaustausch ist die Steuereinrichtung 12 vorzugsweise auch an das weitere Bussystem 25 und/oder auf sonstige Weise angeschlossen bzw. zum Datenaustausch verbunden oder verbindbar.

Vorzugsweise können die Bearbeitungseinrichtungen 3 bzw. deren Maschinensteuerungen 20 Auftragsinformationen A, wie Informationen zum Status, insbesondere Auftragsstatus, Anfragen und/oder Anforderungen, wie durch einen entsprechenden Pfeil in Fig. 9 angedeutet, austauschen. Besonders bevorzugt können Anfragen und Auftragsinformationen A an die Steuereinrichtung 12 übermittelt bzw. dieser mitgeteilt und/oder eine Anforderung einer Linse 2 bzw. eines Linsenträgers 5 an die Steuereinrichtung 12 übermittelt werden. Alternativ oder zusätzlich können Informationen über vorzugsweise von den Sensoren 16 erfasste oder identifizierte Linsen 2 bzw. Linsenträger 5 von den Sensoren 16 direkt oder über die Steuereinrichtung 12 an einzelne, mehrere oder alle Bearbeitungseinrichtungen 3 bzw. deren Maschinensteuerung 20 übermittelt oder diesen bereitgestellt werden. Dieser Informationsaustausch erfolgt insbesondere im Rahmen der Anforderung von neuen Linsen 2 bzw. Linsenträgern 5 durch die Bearbeitungseinrichtungen 3, wie durch die Doppelpfeil A in Fig. 9 angedeutet. Dieser Informationsaustausch kann auch unter Berücksichtigung von weiteren Daten oder Informationen, insbesondere von Prozessdaten P, besonders bevorzugt Bearbeitungsplänen und Bearbeitungsstati, die vorzugsweise durch die Systemsteuerung 21 bereitgestellt werden, erfolgen.

Insbesondere können die Bearbeitungseinrichtungen 3 vorzugsweise selbstständig neue Aufträge bzw. Linsen 2 zur Bearbeitung auswählen und/oder anfordern. Dies ermöglicht gemäß einem besonders bevorzugten Aspekt ein quasi beliebiges bzw. unabhängiges Einklinken bzw. Einfügen von Bearbeitungseinrichtungen 3 in die Anlage 1.

Die vorschlagsgemäße Anlage 1 und das vorschlagsgemäße Verfahren zur Bearbeitung optischer Linsen 2 ist sehr flexibel. Insbesondere kann eine verbesserte oder optimierte Ausnutzung von Bearbeitungskapazitäten erreicht werden. Des Weiteren wird eine sehr flexible Bearbeitung und Anpassung an verschiedene Gegebenheiten ermöglicht. Beispielsweise können Stillstandzeiten oder Ausfälle einzelner Bearbeitungseinrichtungen 3 sehr leicht und/oder in optimaler Weise kompensiert werden, insbesondere sofern andere oder alternative Bearbeitungseinrichtungen 3 zur Verfügung stehen. Alternativ oder zusätzlich kann eine intelligente Schwerpunktsteuerung erfolgen, beispielsweise dahingehend, dass eine für eine bestimmte Bearbeitung besonders geeignete Bearbeitungseinrichtung 3 primär für diese Bearbeitung eingesetzt wird, also beispielsweise eine Drehmaschine mit einem besonders großen Spanraum zur Bearbeitung von besonders lange oder sperrige Späne bei der Bearbeitung erzeugenden Linsen 2.

Die vorschlagsgemäße Anlage 1 und das vorschlagsgemäße Verfahren erlauben insbesondere eine sehr große Flexibilität auch bei der Bearbeitung von Linsen 2 mit unterschiedlichen Formen und/oder aus unterschiedlichen Materialien. Insbesondere können die bisher üblichen Bearbeitungs- oder Fertigungslinien vermieden werden, die primär auf die Bearbeitung von Linsen 2 aus einem bestimmten Material oder von Linsen 2 einer bestimmten Form ausgerichtet sind.

Weiter ermöglichen die vorschlagsgemäße Anlage 1 und das vorschlagsgemäße Verfahren eine besonders gute Ausnutzung von verfügbaren Werkzeugen oder sonstigen Betriebsmitteln.

### Bezugszeichenliste

- 1: Anlage
- 2: Linse
- 3: Bearbeitungseinrichtung (generell)
- 3A: Bearbeitungseinrichtung zum Blocken
- 3B: Bearbeitungseinrichtung zum Zwischenlagern
- 3C: Bearbeitungseinrichtung zum formgebenden Bearbeiten
- 3D: Bearbeitungseinrichtung zum Polieren
- 3E: Bearbeitungseinrichtung zum Prüfen
- 3F: Bearbeitungseinrichtung zum Markieren
- 3G: Bearbeitungseinrichtung zum Beschichten
- 4: Transfersystem
- 5: Linsenträger
- 5A: Kodierung
- 6: Abgabestation
- 7: Aufnahmestation
- 8: Fördereinrichtung (Bearbeitungseinrichtung)
- 9: Transfereinrichtung
- 10, 10', 10": Fördereinrichtung
- 10A: Gurt
- 11: Wechseleinrichtung
- 12: Steuereinrichtung
- 13: Bussystem
- 14: Fördereinrichtung (Längsförderung, Transfereinrichtung)
- 14A: Gurt
- 14B: Antrieb
- 15: Fördereinrichtung (Querförderung)
- 15A: Gurt
- 15B: Antrieb
- 15C: Hubtisch
- 15D: Gurt
- 15E: Anschlag
- 16: Sensor
- 17: Bedienpult
- 18: Stoppeinrichtung
- 19: Aufnahmebereich
- 20: Maschinensteuerung
- 21: Systemsteuerung
- 22: Verbindungseinrichtung
- 23: Fördereinrichtung (Kurvenförderung)
- 24: Stoppbereich
- 25: weiteres Bussystem
- 26: System zur Anzeige und/oder Verwaltung

- A: Auftragsinformation
- F1: erste Förderrichtung
- F2: zweite Förderrichtung
- F3: dritte Förderrichtung
- FR: Rückförderrichtung
- I: Information
- K: Kreisförderung
- O: Auftrag
- P: Produktionsdaten
- S: Statusinformation
- T: Transportspur (generell)
- R: Rückförderverbindung
- T1: erste Transportspur
- T2: zweite Transportspur
- T3: dritte Transportspur

## Patentansprüche

1. Verfahren zur Bearbeitung optischer Linsen (2),
wobei die Bearbeitung in mehreren Schritten erfolgt und ein Polieren, Beschichten, Prüfen, Markieren und/oder Reinigen umfasst,
wobei die Linsen (2) mittels eines Transfersystems (4) zu separaten Bearbeitungseinrichtungen (3) zur unabhängigen Bearbeitung der Linsen (2) wahlweise zugefördert werden, wobei die Linsen (2) selektiv jeder gewünschten Auswahl von Bearbeitungseinrichtungen (3) zuförderbar sind,
wobei eine Systemsteuerung (21) Bearbeitungsstati für die zu bearbeitenden Linsen (2) verwaltet, und
wobei eine bzw. jede Bearbeitungseinrichtung (3) nach beendeter Bearbeitung den neuen Bearbeitungszustand der bearbeiteten Linse(n) (2) der Systemsteuerung (21) mitteilt und eine bzw. jede Bearbeitungseinrichtung (3) nach einer erfolgten Bearbeitung die Linse (2) wieder an das Transfersystem (4) abgibt und eine neue Linse (2) selbsttätig anfordert.

2. Verfahren nach Anspruch 1, **dadurch gekennzeichnet, dass** die Bearbeitungseinrichtungen (3) individuelle Linsen (2) vom Transfersystem (4) holen bzw. anfordern, um eine erforderliche Bearbeitung durchzuführen, und danach die bearbeitete Linse(n) (2) wieder auf das Transfersystem (4) zurückgeben, wobei die für die Bearbeitung erforderlichen Informationen von der Systemsteuerung (21) verwaltet werden und/oder wobei die Anforderung der jeweiligen Bearbeitungseinrichtung (3) und/oder eine Priorisierung von Bearbeitungen bzw. Linsen (2) durch die Systemsteuerung (21) den Ablauf steuert.

3. Verfahren nach Anspruch 1 oder 2, **dadurch gekennzeichnet, dass** die für die Bearbeitung erforderlichen Informationen Bearbeitungsdaten, Bearbeitungspläne bzw. Bearbeitungsreihenfolgen, Bearbeitungsstati, geplante oder erforderliche Bearbeitungsschritte, und/oder optische und/oder geometrische Informationen oder Daten der Linsen (2) sind bzw. enthalten.

4. Verfahren nach einem der voranstehenden Ansprüche, **dadurch gekennzeichnet, dass** die Bearbeitungspläne bzw. Bearbeitungsreihenfolgen von der Systemsteuerung (21) verwaltet werden, wobei Linsen (2) zur Bearbeitung durch eine, mehrere oder alle Bearbeitungseinrichtungen (3) selbsttätig bzw. unabhängig geholt bzw. angefordert werden, insbesondere unter Berücksichtigung eines Bearbeitungsplans und Bearbeitungsstatus.

5. Verfahren nach einem der voranstehenden Ansprüche, **dadurch gekennzeichnet, dass** das Transfersystem (4) derart von der Systemsteuerung (21) gesteuert wird, dass gewünschte Linsen (2) zu den jeweiligen Bearbeitungseinrichtungen (3), bedarfsweise nur auf entsprechende Anforderung der jeweiligen Bearbeitungseinrichtung (3) hin, gefördert werden.

6. Verfahren nach einem der voranstehenden Ansprüche, **dadurch gekennzeichnet, dass** die jeweilige Bearbeitungseinrichtung (3) über mindestens einen zugeordneten Sensor (16) eine für die Bearbeitung in der jeweiligen Bearbeitungseinrichtung (3) einen Linsenträger (5) mit einer geeigneten Linse (2) erfasst und anfordert und/oder dass die jeweilige Bearbeitungseinrichtung (3) eine Kodierung (5A) eines Linsenträgers (5) zur Bestimmung von Bearbeitungsplänen erfasst und die Bearbeitung in der Bearbeitungseinrichtung (3) in Abhängigkeit von den Bearbeitungsplänen erfolgt.

7. Verfahren nach einem der voranstehenden Ansprüche, **dadurch gekennzeichnet, dass** der Status der Bearbeitungseinrichtungen (3), insbesondere der Bearbeitungsstatus, die Verfügbarkeit der jeweiligen Bearbeitungseinrichtung (3), die Werkzeugausstattung und/oder die möglichen Bearbeitungen, als Statusinformationen (S) von den Bearbeitungseinrichtungen (3) an die Systemsteuerung (21) und/oder an ein System (26) zur Anzeige und/oder Verwaltung übermittelt werden.

8. Verfahren nach Anspruch 7, **dadurch gekennzeichnet, dass** das System (26) der Visualisierung und/oder Verwaltung von Zuständen der Bearbeitungseinrichtungen (3), Produktionsdaten, Prozessdaten und/oder sonstiger Informationen und/oder der Verwaltung von Makros und/oder dem Berichtswesen dient.

9. Verfahren nach einem der voranstehenden Ansprüche, **dadurch gekennzeichnet, dass** die Linsen (2) von Fördereinrichtungen (8) in den Bearbeitungseinrichtungen (3) unabhängig gefördert werden und dass die Bearbeitungseinrichtungen (3) ihre zugeordnete Fördereinrichtung (8) jeweils unabhängig von dem Transfersystem (4) steuern.

10. Verfahren nach einem der voranstehenden Ansprüche, **dadurch gekennzeichnet, dass** die Linsen (2) bedarfsweise an jeder beliebigen Bearbeitungseinrichtung (3) über eine parallele Transportspur (T2, T3) vorbei förderbar sind und/oder dass die Linsen (2), insbesondere mittels einer dritten Transportspur (T3), rückwärts gefördert werden können.

11. Anlage (1) zur Bearbeitung optischer Linsen (2),
mit mehreren separaten Bearbeitungseinrichtungen (3) zur unabhängigen Bearbeitung der Linsen (2), wobei die Bearbeitung in mehreren Schritten erfolgt und ein Polieren, Beschichten, Prüfen, Markieren und/oder Reinigen umfasst,
mit einem Transfersystem (4) zur Förderung der Linsen (2) zu und von den Bearbeitungseinrichtungen (3), derart ausgebildet, dass die Linsen (2) selektiv jeder gewünschten Auswahl von Bearbeitungseinrichtungen (3) zuförderbar sind, und mit einer Systemsteuerung (21), die Bearbeitungspläne und Bearbeitungsstati für die Linsen (2) bereit hält,
wobei das Transfersystem (4) mehrere Transfereinrichtungen (9) und Sensoren (16) aufweist,
wobei eine Bearbeitungseinrichtung (3) zur Anforderung einer mittels eines Sensors (16) erfassten Linse (2) über eine Steuereinrichtung (12) ausgebildet ist, sofern diese Linse (2) von der Bearbeitungseinrichtung (3) gemäß dem Bearbeitungsplan und Bearbeitungsstatus bearbeitet werden kann, und
wobei die Bearbeitungseinrichtung (3) dazu ausgebildet ist, nach erfolgter Bearbeitung in der Bearbeitungseinrichtung (3) den neuen Bearbeitungsstatus der Systemsteuerung (21) mitzuteilen und die bearbeitete Linse (2) wieder an das Transfersystem (4) zum Freifahren der Bearbeitungseinrichtung (3) zu übergeben.

12. Anlage nach Anspruch 11, **dadurch gekennzeichnet, dass** die Anlage (1) ein System (26) aufweist, das der Visualisierung und/oder Verwaltung von Zuständen der Bearbeitungseinrichtungen (3), Produktionsdaten, Prozessdaten und/oder sonstigen Informationen und/oder der Verwaltung von Makros und/oder dem Berichtswesen dient, insbesondere wobei das System (26) zum Informations- bzw. Datenaustausch an ein Bussystem (25) angeschlossen ist oder der Datenaustausch über die Systemsteuerung (21) erfolgt.

13. Anlage nach Anspruch 11 oder 12, **dadurch gekennzeichnet, dass** einzelne, mehrere oder alle Bearbeitungseinrichtungen (3) an die Systemsteuerung (21) angeschlossen sind, vorzugsweise über ein Datennetzwerk oder Bussystem (25), und/oder dass eine Steuereinrichtung (12) der Anlage (1) einerseits und die Systemsteuerung (21) andererseits zum Informations- bzw. Datenaustausch miteinander gekoppelt sind.

14. Anlage nach einem der Ansprüche 11 bis 13, **dadurch gekennzeichnet, dass** die Systemsteuerung (21) dazu ausgebildet ist, die von der Anlage (1) abzuarbeitenden Aufträge bzw. die von der Anlage (1) zu bearbeitenden Linsen (2) bzw. die für die Bearbeitung erforderlichen Informationen, wie Bearbeitungsdaten, Bearbeitungspläne bzw. Bearbeitungsreihenfolgen, Bearbeitungsstati, geplante oder erforderliche Bearbeitungsschritte, optische und/oder geometrische Informationen oder Daten der Linsen (2), zu verwalten.

15. Anlage nach einem der Ansprüche 11 bis 14, **dadurch gekennzeichnet, dass** die Systemsteuerung (21) ein Linsenmanagementsystem bildet und/oder die Systemsteuerung (21) der Annahme oder Erfassung von Aufträgen (O) und/oder der Verwaltung von Aufträgen, Produktionsdaten und/oder Linsenrohlingen und/oder der Bereitstellung von Schnittstellen zu anderen Systemen dient.

## Claims

1. A method for processing optical lenses (2),
wherein the processing occurs in a plurality of steps and comprises a polishing, coating, testing, marking and/or cleansing,
wherein the lenses (2) are optionally conveyed by means of a transfer system (4) to separate processing apparatus (3) for independent processing of the lenses (2), wherein the lenses (2) can be selectively conveyed to any desired selection of processing apparatus (3),
wherein a system controller (21) manages processing statuses for the lenses (2) to be processed, and
wherein one or each processing apparatus (3) communicates the new processing state of the processed lens(es) (2) to the system controller (21) after each completed processing and one or each processing apparatus (3) delivers the lens (2) to the transfer system (4) after an occurred processing and automatically requests a new lens (2).

2. The method according to claim 1, **characterized in that** the processing apparatus (3) get or request individual lenses (2) from the transfer system (4) in order to carry out a required processing, and thereafter return the processed lens(es) (2) to the transfer system (4), wherein the information required for the processing is managed by the system controller (21) and/or wherein the request of the respective processing apparatus (3) and/or a prioritization of processing or lenses (2) by means of the system controller (21) controls the procedure.

3. The method according to claim 1 or 2, **characterized in that** information required for the processing is or includes processing data, processing plans or processing sequences, processing statuses, planned or required processing steps, and/or optical and/or geometric information or data of the lenses (2).

4. The method according to any of the foregoing claims, **characterized in that** the processing plans or processing sequences are managed by the system controller (21), wherein lenses (2) for processing are automatically or independently fetched or requested by one, a plurality of, or all processing apparatus (3), in particular, in consideration of a processing plan and processing status.

5. The method according to any of the foregoing claims, **characterized in that** the transfer system (4) is controlled by the system controller (21) such that desired lenses (2) are conveyed to the respective processing apparatus (3), where necessary only upon corresponding request of the respective processing apparatus (3).

6. The method according to any of the foregoing claims, **characterized in that** the respective processing apparatus (3) detects and requests a lens carrier (5) with a lens (2) suitable for processing in the respective processing apparatus (3) via at least one assigned sensor (16) and/or **in that** the respective processing apparatus (3) detects a coding (5A) of a lens carrier (5) for determining processing plans and the processing occurs in the processing apparatus (3) as a function of the processing plans.

7. The method according to any of the foregoing claims, **characterized in that** the status of the processing apparatus (3), in particular the processing status, the availability of the respective processing apparatus (3), the tooling and/or the possible processing, are communicated as status information (S) from the processing apparatus (3) to the system controller (21) and/or to a system (26) for display and/or management.

8. The method according to claim 7, **characterized in that** the system (26) is used for visualization and/or management of states of the processing apparatus (3), production data, process data and/or other information and/or of the reporting.

9. The method according to any of the foregoing claims, **characterized in that** the lenses (2) are independently conveyed to the processing apparatus (3) by conveying devices (8) and that the processing apparatus (3) control their assigned conveying device (8) in each case independently from the transfer system (4).

10. The method according to any of the foregoing claims, **characterized in that** the lenses (2) where necessary can be conveyed past any processing apparatus (3) via a parallel transport track (T2, T3) and/or that the lenses (2) can be transported backwards, in particular by means of a third transport track (T3).

11. An installation (1) for processing optical lenses (2), having a plurality of separate processing apparatus (3) for independent processing of the lenses (2), wherein the processing occurs in a plurality of steps and comprises a polishing, coating, testing, marking and/or cleansing,
having a transfer system (4) for conveyance of the lenses (2) to and from the processing apparatus (3), configured such that the lenses (2) can be selectively conveyed to any desired selection of processing apparatus (3), and
having a system controller (21), which keeps available processing plans and processing statuses for the lenses (2),
wherein the transfer system (4) has a plurality of transfer devices (9) and sensors (16),
wherein a processing apparatus (3) is configured for requesting a lens (2) detected by means of a sensor (16) via a control device (12), provided this lens (2) can be processed by the processing apparatus (3) according to the processing plan and processing status, and
wherein the processing apparatus (3) is configured to communicate the new processing status to the system controller (21) after an occurred processing in the processing apparatus (3) and transfer processed lens (2) back to the transfer system (4) for release to the processing apparatus (3).

12. The installation according to claim 11, **characterized in that** the installation (1) has a system (26) that is used to visualize and/or manage states of the processing apparatus (3), production data, process data and/or other information and/or the management of macros and/or the reporting, in particular wherein the system (26) is connected to a bus system (25) for information or data exchange, or the data exchange occurs via the system controller (21).

13. The installation according to claim 11 or 12, **characterized in that** individual, several or all processing apparatus (3) are connected to the system controller (21), preferably via a data network or bus system (25), and/or that a control device control device (12) couples the installation (1) on the one hand and the system controller (21) on the other hand to each other for information or data exchange.

14. The installation according to any of claims 11 to 13, **characterized in that** system controller (21) is configured to manage the orders to be handled by the installation (1) or the lenses (2) to be processed by the installation (1) or the information required for the processing, such as processing data, processing plans or processing sequences, processing statuses, planned or required processing steps, optical and/or geometrical information or data of the lenses (2).

15. The installation according to any of claims 11 to 14, **characterized in that** the system controller (21) forms a lens management system and/or the system controller (21) is used for the acceptance or detection of orders (O) and/or the management of orders, production data and/or lens blanks and/or the provision of interfaces to other systems.

## Revendications

1. Procédé pour usiner des lentilles optiques (2),
dans lequel l'usinage s'effectue en plusieurs étapes et comprend un polissage, revêtement, contrôle, marquage et/ou nettoyage,
dans lequel les lentilles (2) sont amenées au choix au moyen d'un système de transfert (4) vers des dispositifs d'usinage (3) séparés pour l'usinage indépendant des lentilles (2), dans lequel les lentilles (2) peuvent être amenées de manière sélective à chaque choix souhaité de dispositifs d'usinage (3),
dans lequel une commande de système (21) gère des statuts d'usinage pour les lentilles (2) à usiner, et
dans lequel un ou chaque dispositif d'usinage (3) une fois l'usinage terminé communique le nouvel état d'usinage de la (des) lentille(s) (2) usinée(s) à la commande de système (21) et un ou chaque dispositif d'usinage (3) une fois un usinage effectué délivre à nouveau la lentille (2) au système de transfert (4) et demande automatiquement une nouvelle lentille (2) .

2. Procédé selon la revendication 1, **caractérisé en ce que** les dispositifs d'usinage (3) prennent ou demandent des lentilles (2) individuelles du système de transfert (4), afin de réaliser un usinage nécessaire, et ensuite redonnent à nouveau la(les) lentille (s) (2) usinée(s) au système de transfert (4), dans lequel les informations nécessaires à l'usinage sont gérées par la commande de système (21) et/ou dans lequel la demande du dispositif d'usinage (3) respectif et/ou une priorisation d'usinages ou de lentilles (2) par la commande de système (21) commande le déroulement.

3. Procédé selon la revendication 1 ou 2, **caractérisé en ce que** les informations nécessaires à l'usinage sont ou contiennent des données d'usinage, plans d'usinage ou ordres d'usinage, statuts d'usinage, étapes d'usinage planifiées ou nécessaires, et/ou des informations optiques et/ou géométriques ou données des lentilles (2).

4. Procédé selon l'une quelconque des revendications précédentes, **caractérisé en ce que** les plans d'usinage ou ordres d'usinage sont gérés par la commande de système (21), dans lequel les lentilles (2) à usiner sont données ou demandées automatiquement ou indépendamment par un, plusieurs ou tous les dispositifs d'usinage (3), en particulier avec prise en compte d'un plan d'usinage et statut d'usinage.

5. Procédé selon l'une quelconque des revendications précédentes, **caractérisé en ce que** le système de transfert (4) est commandé par la commande de système (21), de telle sorte que les lentilles (2) souhaitées sont convoyées vers les dispositifs d'usinage (3) respectifs, si besoin est uniquement sur demande correspondante du dispositif d'usinage (3) respectif.

6. Procédé selon l'une quelconque des revendications précédentes, **caractérisé en ce que** le dispositif d'usinage (3) respectif détecte et demande un support de lentille (5) avec une lentille (2) adaptée pour l'usinage dans le dispositif d'usinage (3) respectif par l'intermédiaire d'au moins un capteur (16) associé et/ou que le dispositif d'usinage (3) respectif détecte un codage (5A) d'un support de lentille (5) pour la détermination de plans d'usinage et l'usinage dans le dispositif d'usinage (3) s'effectue en fonction des plans d'usinage.

7. Procédé selon l'une quelconque des revendications précédentes, **caractérisé en ce que** le statut des dispositifs d'usinage (3), en particulier le statut d'usinage, la disponibilité du dispositif d'usinage (3) respectif, l'équipement d'outil et/ou les usinages possibles sont transmis en tant qu'informations de statut (S) à partir des dispositifs d'usinage (3) à la commande de système (21) et/ou à un système (26) d'affichage et/ou de gestion.

8. Procédé selon la revendication 7, **caractérisé en ce que** le système (26) sert à la visualisation et/ou gestion d'états des dispositifs d'usinage (3), de données de production, données de traitement et/ou d'autres informations et/ou à la gestion de macros et/ou à l'établissement de rapports.

9. Procédé selon l'une quelconque des revendications précédentes, **caractérisé en ce que** les lentilles (2) sont convoyées dans les dispositifs d'usinage (3) par des dispositifs de convoyage (8) de manière indépendante et que les dispositifs d'usinage (3) commandent leur dispositif de convoyage (8) associé respectivement indépendamment du système de transfert (4) .

10. Procédé selon l'une quelconque des revendications précédentes, **caractérisé en ce que** les lentilles (2) peuvent être convoyées si besoin est le long de n'importe quel dispositif d'usinage (3) par l'intermédiaire d'une piste de transport (T2, T3) parallèle et/ou que les lentilles (2) peuvent être convoyées en marche arrière, en particulier au moyen d'une troisième piste de transport (T3).

11. Installation (1) pour l'usinage de lentilles (2) optiques,
avec plusieurs dispositifs d'usinage (3) séparés pour l'usinage indépendant des lentilles (2), dans laquelle l'usinage s'effectue en plusieurs étapes et comprend un polissage, revêtement, contrôle, marquage et/ou nettoyage,
avec un système de transfert (4) pour le convoyage des lentilles (2) vers et à partir des dispositifs d'usinage (3), réalisé de telle sorte que les lentilles (2) peuvent être amenées de manière sélective à chaque choix souhaité de dispositifs d'usinage (3), et
avec une commande de système (21), qui tient à disposition des plans d'usinage et statuts d'usinage pour les lentilles (2),
dans laquelle le système de transfert (4) présente plusieurs dispositifs de transfert (9) et capteurs (16),
dans laquelle un dispositif d'usinage (3) est réalisé pour demander une lentille (2) détectée au moyen d'un capteur (16) par l'intermédiaire d'un dispositif de commande (12), dans la mesure où cette lentille (2) peut être usinée par le dispositif d'usinage (3) selon le plan d'usinage et statut d'usinage, et
dans laquelle le dispositif d'usinage (3) est réalisé pour, une fois l'usinage effectué dans le dispositif d'usinage (3), communiquer le nouveau statut d'usinage à la commande de système (21) et remettre à nouveau la lentille (2) usinée au système de transfert (4) pour libérer le dispositif d'usinage (3).

12. Installation selon la revendication 11, **caractérisée en ce que** l'installation (1) présente un système (26), qui sert à la visualisation et/ou gestion d'états des dispositifs d'usinage (3), de données de production, données de traitement et/ou d'autres informations et/ou à la gestion de macros et/ou à l'établissement de rapports, en particulier dans laquelle le système (26) pour l'échange d'informations et/ou de données est raccordé à un système de bus (25) ou l'échange de données s'effectue par l'intermédiaire de la commande de système (21).

13. Installation selon la revendication 11 ou 12, **caractérisée en ce que** quelques-uns, plusieurs ou tous les dispositifs d'usinage (3) sont raccordés à la commande de système (21), de préférence par l'intermédiaire d'un réseau de données ou système de bus (25), et/ou qu'un dispositif de commande (12) de l'installation (1) d'une part et la commande de système (21) d'autre part sont accouplés l'un à l'autre pour l'échange d'informations ou de données.

14. Installation selon l'une quelconque des revendications 11 à 13, **caractérisée en ce que** la commande de système (21) est réalisée pour gérer les commandes destinées à être exécutées par l'installation (1) ou les lentilles (2) destinées à être usinées par l'installation (1) ou les informations nécessaires à l'usinage, telles que les données d'usinage, plans d'usinage ou ordres d'usinage, statuts d'usinage, étapes d'usinage planifiées ou nécessaires, informations optiques et/ou géométriques ou données des lentilles (2).

15. Installation selon l'une quelconque des revendications 11 à 14, **caractérisée en ce que** la commande de système (21) forme un système de gestion de lentilles et/ou la commande de système (21) sert à accepter ou détecter des commandes (O) et/ou à gérer des commandes, données de production et/ou ébauches de lentilles et/ou à fournir des interfaces par rapport à d'autres systèmes.
